# EUROPEAN PATENT APPLICATION

(11) **EP 4 600 081 A1**
(43) Date of publication of application: **13.08.2025**
(21) Application number: 24196976.5
(22) Date of filing: 28.08.2024
(51) Int. Cl.: B60L 58/24, H01M 10/61, H01M 10/633, B60L 3/00, B60L 1/00, B60L 1/04

(54) **TEMPERATURE CONTROL METHOD, SYSTEM, DEVICE, AND VEHICLE**

(30) Priority: 07.02.2024 CN 202410175691
(71) Applicant: Xiaomi EV Technology Co., Ltd., 100176 Beijing (CN)
(72) Inventor: WANG, Zhensuo, Beijing, 100176 (CN); WANG, Lifa, Beijing, 100176 (CN)
(74) Representative: Zimmermann, Tankred Klaus

(57) **Abstract**

A temperature control method includes determining (S11) a target temperature regulating system operating normally among a plurality of temperature regulating systems, the temperature regulating system being configured to regulate the temperature of a battery pack, and the battery pack being configured to supply power to the temperature regulating system; determining (S12) a target control strategy matching a first state of the plurality of temperature regulating systems and a second state of a plurality of battery packs; and controlling (S13) the target temperature regulating system to regulate the temperature of the plurality of battery packs according to the target control strategy.

## Description

### FIELD

The present invention relates to the technical field of vehicles, and more particularly to a temperature control method, a system, a device, and a vehicle.

### BACKGROUND

At present, vehicles are equipped with a battery pack and a temperature regulating system, the battery pack is configured to supply power to a high-voltage load or a low-voltage load on the vehicle, the battery pack may supply power to the temperature regulating system, and the temperature regulating system is configured to regulate the temperature of the battery pack, so that the battery pack operates at a suitable ambient temperature.

### SUMMARY

In order to overcome problems existing in the related art, the present invention provides a temperature control method, a system, a device, and a vehicle.

The invention is set out in the appended set of claims.

According to a first aspect of embodiments of the present invention, a temperature control method is provided, including: determining a target temperature regulating system operating normally among a plurality of temperature regulating systems, the temperature regulating system being configured to regulate a temperature of a battery pack, and the battery pack being configured to supply power to the temperature regulating system; determining a target control strategy matching a first state of the plurality of temperature regulating systems and a second state of a plurality of battery packs; and controlling the target temperature regulating system to regulate the temperature of the plurality of battery packs according to the target control strategy.

Optionally, a multi-way valve is provided between the plurality of temperature regulating systems and the plurality of battery packs, and controlling the target temperature regulating system to regulate the temperature of the plurality of battery packs according to the target control strategy includes: controlling a communication state of the multi-way valve according to the target control strategy, and controlling the target temperature regulating system to regulate the temperature of the plurality of battery packs.

Optionally, the plurality of temperature regulating systems include a first temperature regulating system and a second temperature regulating system, the plurality of battery packs include a first battery pack and a second battery pack, the target temperature regulating system includes the first temperature regulating system and the second temperature regulating system, the first state is a state where the first temperature regulating system and the second temperature regulating system operate normally, the second state is a state where the first battery pack and the second battery pack operate normally, and a corresponding target control strategy is a first control strategy; and controlling the target temperature regulating system to regulate the temperature of the plurality of battery packs according to the target control strategy includes: controlling the first temperature regulating system and the second temperature regulating system to regulate the temperature of the first battery pack and the second battery pack according to the first control strategy.

Optionally, controlling the first temperature regulating system and the second temperature regulating system to regulate the temperature of the first battery pack and the second battery pack according to the first control strategy includes: controlling the first temperature regulating system to communicate with a first temperature regulating circuit of the first battery pack, and controlling the second temperature regulating system to communicate with a second temperature regulating circuit of the second battery pack; wherein, after the first temperature regulating system is communicated with the first temperature regulating circuit, the first temperature regulating system regulates the temperature of the first battery pack; and after the second temperature regulating system is communicated with the second temperature regulating circuit, the second temperature regulating system regulates the temperature of the second battery pack.

Optionally, controlling the first temperature regulating system and the second temperature regulating system to regulate the temperature of the first battery pack and the second battery pack according to the first control strategy includes: controlling the first temperature regulating system, the second temperature regulating system, a first temperature regulating circuit of the first battery pack, and a second temperature regulating circuit of the second battery pack to form a series circuit.

Optionally, controlling the first temperature regulating system and the second temperature regulating system to regulate the temperature of the first battery pack and the second battery pack according to the first control strategy includes: controlling the first temperature regulating system to communicate with a first temperature regulating circuit of the first battery pack and a second temperature regulating circuit of the second battery pack, and controlling the second temperature regulating system to communicate with the first temperature regulating circuit and the second temperature regulating circuit; wherein, after the first temperature regulating system is communicated with the first temperature regulating circuit and the second temperature regulating circuit, the first temperature regulating system simultaneously regulates the temperature of the first battery pack and the second battery pack; after the second temperature regulating system is communicated with the first temperature regulating circuit and the second temperature regulating circuit, the second temperature regulating system simultaneously regulates the temperature of the first battery pack and the second battery pack.

Optionally, the plurality of temperature regulating systems include a first temperature regulating system and a second temperature regulating system, the plurality of battery packs includes a first battery pack and a second battery pack, the target temperature regulating system is the first temperature regulating system, the first state is a state where the first temperature regulating system operates normally and the second temperature regulating system is abnormal, the second state is a state where the first battery pack and the second battery pack operate normally, and a corresponding target control strategy is a second control strategy; and controlling the target temperature regulating system to regulate the temperature of the plurality of battery packs according to the target control strategy includes: controlling the first temperature regulating system to regulate the temperature of the first battery pack and the second battery pack according to the second control strategy.

Optionally, controlling the first temperature regulating system to regulate the temperature of the first battery pack and the second battery pack according to the second control strategy includes: controlling the first temperature regulating system to communicate with a first temperature regulating circuit of the first battery pack and a second temperature regulating circuit of the second battery pack; wherein, after the first temperature regulating system is communicated with the first temperature regulating circuit and the second temperature regulating circuit, the first temperature regulating system simultaneously regulates the temperature of the first battery pack and the second battery pack.

Optionally, controlling the first temperature regulating system to regulate the temperature of the first battery pack and the second battery pack according to the second control strategy includes: controlling the first temperature regulating system, a first temperature regulating circuit of the first battery pack, and a second temperature regulating circuit of the second battery pack to form a series circuit.

Optionally, the plurality of temperature regulating systems include a first temperature regulating system and a second temperature regulating system, the plurality of battery packs include a first battery pack and a second battery pack, the target temperature regulating system includes the first temperature regulating system and the second temperature regulating system, the first state is a state where the first temperature regulating system operates normally and the second temperature regulating system is abnormal, the second state is a state where any one of the first battery pack and the second battery pack is abnormal, and a corresponding target control strategy is a third control strategy; and controlling the target temperature regulating system to regulate the temperature of the plurality of battery packs according to the target control strategy includes: controlling the first temperature regulating system to regulate the temperature of the first battery pack or the second battery pack according to the third control strategy.

Optionally, controlling the first temperature regulating system to regulate the temperature of the first battery pack or the second battery pack according to the third control strategy includes: controlling the first temperature regulating system to communicate with a first temperature regulating circuit of the first battery pack when the first battery pack is normal and the second battery pack is damaged; wherein, after the first temperature regulating system is communicated with the first temperature regulating circuit, the first temperature regulating system regulates the temperature of the first battery pack.

Optionally, controlling the first temperature regulating system to regulate the temperature of the first battery pack or the second battery pack according to the third control strategy includes: controlling the first temperature regulating system to communicate with a second temperature regulating circuit of the second battery pack when the first battery pack is damaged and the second battery pack is normal; wherein, after the first temperature regulating system is communicated with the second temperature regulating circuit, the first temperature regulating system regulates the temperature of the second battery pack.

Optionally, controlling the first temperature regulating system to regulate the temperature of the first battery pack or the second battery pack according to the third control strategy includes: controlling the first temperature regulating system to communicate with a second temperature regulating circuit of the second battery pack when the first battery pack is normal and the temperature of the second battery pack exceeds a temperature threshold; wherein, after the first temperature regulating system is communicated with the second temperature regulating circuit, the first temperature regulating system regulates the temperature of the second battery pack.

Optionally, the plurality of temperature regulating systems include a first temperature regulating system and a second temperature regulating system, the plurality of battery packs include a first battery pack and a second battery pack, the target temperature regulating system includes the first temperature regulating system and the second temperature regulating system, the first state is a state where the first temperature regulating system and the second temperature regulating system operate normally, the second state is a state where the second battery pack is abnormal, and a corresponding target control strategy is a fourth control strategy; and controlling the target temperature regulating system to regulate the temperature of the plurality of battery packs according to the target control strategy includes: controlling the first temperature regulating system and the second temperature regulating system to regulate the temperature of the first battery pack or the second battery pack according to the fourth control strategy.

Optionally, controlling the first temperature regulating system and the second temperature regulating system to regulate the temperature of the first battery pack or the second battery pack according to the fourth control strategy includes: controlling the first temperature regulating system to communicate with a first temperature regulating circuit of the first battery pack when an abnormal state of the second battery pack is a damaged state; wherein, after the first temperature regulating system is communicated with the first temperature regulating circuit, the first temperature regulating system regulates the temperature of the first battery pack.

Optionally, controlling the first temperature regulating system and the second temperature regulating system to regulate the temperature of the first battery pack or the second battery pack according to the fourth control strategy includes: controlling the first temperature regulating system and the second temperature regulating system to communicate with a first temperature regulating circuit of the first battery pack when an abnormal state of the second battery pack is a damaged state.

Optionally, controlling the first temperature regulating system and the second temperature regulating system to regulate the temperature of the first battery pack or the second battery pack according to the fourth control strategy includes: controlling the first temperature regulating system to communicate with a first temperature regulating circuit of the first battery pack and controlling the second temperature regulating system to communicate with the first temperature regulating circuit when an abnormal state of the second battery pack is a damaged state; wherein, after the first temperature regulating system is communicated with the first temperature regulating circuit, the first temperature regulating system regulates the temperature of the first battery pack; and after the second temperature regulating system is communicated with the first temperature regulating circuit, the second temperature regulating system regulates the temperature of the first battery pack.

Optionally, controlling the first temperature regulating system and the second temperature regulating system to regulate the temperature of the first battery pack or the second battery pack according to the fourth control strategy includes: controlling the first temperature regulating system to communicate with a second temperature regulating circuit of the second battery pack and controlling the second temperature regulating system to communicate with the second temperature regulating circuit when an abnormal state of the second battery pack is a thermal spread state; wherein, after the first temperature regulating system is communicated with the second temperature regulating circuit, the first temperature regulating system regulates the temperature of the second battery pack; and after the second temperature regulating system is communicated with the second temperature regulating circuit, the second temperature regulating system regulates the temperature of the second battery pack.

Optionally, controlling the first temperature regulating system and the second temperature regulating system to regulate the temperature of the first battery pack or the second battery pack according to the fourth control strategy includes: controlling the first temperature regulating system, the second temperature regulating system, and a second temperature regulating circuit of the second battery pack to form a series circuit when an abnormal state of the second battery pack is a thermal failure state.

According to a second aspect of embodiments of the present invention, there is provided a controller configured to execute the steps of the temperature control method provided in the first aspect of embodiments of the present invention.

According to a third aspect of embodiments of the present invention, a temperature control system is provided, including a plurality of temperature regulating systems, a plurality of battery packs, and a controller according to the second aspect of embodiments of the present invention. The plurality of temperature regulating systems are respectively coupled to the plurality of battery packs, and the plurality of temperature regulating systems are configured to regulate the temperature of the plurality of battery packs; and the plurality of battery packs are configured to supply power to the plurality of temperature regulating systems.

Optionally, the temperature control system further includes a multi-way valve; a first end of the multi-way valve is connected with the plurality of temperature regulating systems, and a second end of the multi-way valve is connected with a temperature regulating circuit of the plurality of battery packs; wherein the multi-way valve is configured to transmit a temperature regulating liquid output from the plurality of temperature regulating systems to the temperature regulating circuit, and return the temperature regulating liquid output from the temperature regulating circuit to the temperature regulating systems.

Optionally, the multi-way valve is a multi-way integrated valve.

Optionally, the multi-way valve includes a first controllable valve, a second controllable valve, a third controllable valve, and a the fourth controllable valve; the plurality of temperature regulating systems include a first temperature regulating system and a second temperature regulating system; and the plurality of battery packs include a first battery pack and a second battery pack. A first end of the first controllable valve is connected to the first battery pack and the first temperature regulating system, and a second end of the first controllable valve is connected to the second battery pack and the second temperature regulating system. A first end of the second controllable valve is connected to the first end of the first controllable valve, and a second end of the second controllable valve is connected between the first temperature regulating system and the second temperature regulating system. A first end of the third controllable valve is connected to the second end of the first controllable valve, and a second end of the third controllable valve is connected between the second controllable valve and the second temperature regulating system. The fourth controllable valve is connected between the second controllable valve and the third controllable valve.

According to a fourth aspect of embodiments of the present invention, a temperature control device is provided, including: a system determination module configured to determine a target temperature regulating system operating normally among a plurality of temperature regulating systems, the temperature regulating system being configured to regulate the temperature of a battery pack, and the battery pack being configured to supply power to the temperature regulating system; a state determination module configured to determine a target control strategy matching a first state of the plurality of temperature regulating systems and a second state of a plurality of battery packs; and a temperature regulating module configured to control the target temperature regulating system to regulate the temperature of the plurality of battery packs according to the target control strategy.

According to a fifth aspect of embodiments of the present invention, there is provided a vehicle provided with a temperature control system provided in the third aspect of embodiments of the present invention.

The technical solution provided in embodiments of the present invention may include the following beneficial effects.

Firstly, due to the plurality of temperature regulating systems proposed by the present invention, when part of the temperature regulating systems is abnormal, another part of the temperature regulating systems may continue to regulate the temperature of the battery pack to prevent the temperature of the battery pack from continuously rising, so that the battery pack operates within a reasonable temperature range, and the battery pack may also provide power support for the full power and full performance operation of the vehicle, thus avoiding the failure of the thermal management system. Secondly, due to the plurality of battery packs proposed by the present invention, when part of the battery packs is abnormal, another part of the battery packs may continue to supply power to the temperature regulating system, so that the temperature regulating system may operate for a long time with power and also cool the normally operating battery packs for a long time, avoiding abnormal states such as thermal failure or thermal spread of the battery pack due to excessive temperature, and avoiding the failure of the thermal management system.

It should be understood that both the forgoing general descriptions and the following detailed descriptions are illustrative and explanatory only, and are not restrictive of the present invention.

### BRIEF DESCRIPTION OF THE DRAWINGS

The drawings herein are incorporated into the specification and form a part of the specification, show embodiments that comply with the present invention, and are used to explain the principles of the present invention together with the specification.
FIG. 1 shows a flowchart of a temperature control method according to an exemplary embodiment.
FIG. 2 shows a schematic diagram of a thermal management system composed of a single battery pack and a single temperature regulating system according to an exemplary embodiment.
FIG. 3 shows a schematic diagram of a multi-way integrated valve according to an exemplary embodiment.
FIG. 4 shows a schematic diagram of a first controllable valve to a fourth controllable valve according to an exemplary embodiment.
FIG. 5 shows a schematic diagram of a first temperature regulating system and a second temperature regulating system operating independently according to an exemplary embodiment.
FIG. 6 shows a schematic diagram of a first temperature regulating system and a second temperature regulating operating in series according to an exemplary embodiment.
FIG. 7 shows a schematic diagram of a first temperature regulating system and a second temperature regulating operating in parallel according to an exemplary embodiment.
FIG. 8 shows a schematic diagram of a first temperature regulating circuit and a second temperature regulating circuit connected in parallel according to an exemplary embodiment.
FIG. 9 shows a schematic diagram of a first temperature regulating circuit and a second temperature regulating circuit connected in series according to an exemplary embodiment.
FIG. 10 shows a schematic diagram of a first temperature regulating system regulating a temperature of a first battery pack according to an exemplary embodiment.
FIG. 11 shows a schematic diagram of a first temperature regulating system regulating a temperature of a second battery pack according to an exemplary embodiment.
FIG. 12 shows a schematic diagram of a first temperature regulating system regulating a temperature of a second battery pack according to an exemplary embodiment.
FIG. 13 shows a schematic diagram of a first temperature regulating system regulating a temperature of a first battery pack according to an exemplary embodiment.
FIG. 14 shows a schematic diagram of a first temperature regulating system and a second temperature regulating system connected in series and regulating a temperature of a first battery pack according to an exemplary embodiment.
FIG. 15 shows a schematic diagram of a first temperature regulating system and a second temperature regulating system connected in parallel and regulating a temperature of a first battery pack according to an exemplary embodiment.
FIG. 16 shows a schematic diagram of a first temperature regulating system and a second temperature regulating system connected in parallel and regulating a temperature of a second battery pack according to an exemplary embodiment.
FIG. 17 shows a schematic diagram of a first temperature regulating system and a second temperature regulating system connected in series and regulating a temperature of a second battery pack according to an exemplary embodiment.
FIG. 18 shows a block diagram of a temperature control device according to an exemplary embodiment.
FIG. 19 shows a block diagram of a vehicle according to an exemplary embodiment.

### DETAILED DESCRIPTION

Exemplary embodiments are described in detail here, and examples are shown in the accompanying drawings. When the following description refers to the accompanying drawings, unless specified or limited otherwise, the same number in different accompanying drawings indicates the same or similar elements. Embodiments described in the following exemplary examples are not representative of all embodiments consistent with the present invention. Rather, they are only examples of devices and methods that are consistent with some aspects of the present invention as detailed in the attached claims.

It should be noted that all actions to obtain signals, information, or data in this application are carried out in accordance with the corresponding data protection regulations and policies of the country where they are located, and with authorization granted by the owner of the corresponding device.

It may be understood that terms "first" and "second" in this disclosure are proposed to facilitate readers to understand. "First" and "second" may be used interchangeably, for example, "first temperature regulating system" and "second temperature regulating system" may be replaced with each other, "first battery pack" and "second battery pack" may be replaced with each other, and "first temperature regulating circuit" and "second temperature regulating circuit" may be replaced with each other.

In the related art, a battery thermal management system on a vehicle consists of one battery pack and one temperature regulating system. If the battery pack is damaged, it cannot supply power to the temperature regulating system, causing the temperature regulating system to no longer operate after some time; and if the temperature regulating system is damaged, it cannot cool the battery pack. In either case, this will result in the failure of the battery thermal management system, so that the battery thermal management system cannot operate normally.

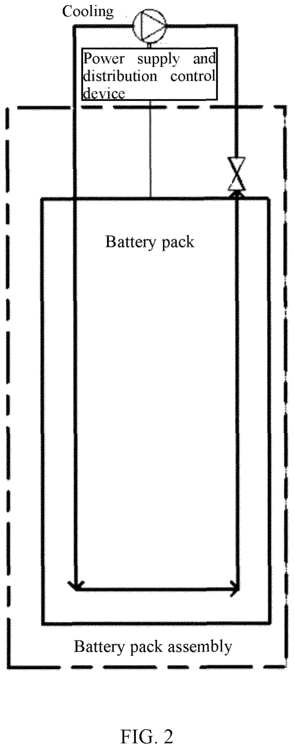

In the related art, referring to FIG. 2, a battery thermal management system on a vehicle consists of one battery pack and one temperature regulating system. The battery pack supplies power to the temperature regulating system, and the temperature regulating system regulates the temperature of the battery pack. This easily results in the failure of the battery thermal management system, as shown below.

(1) In the case that the battery pack is damaged, the battery pack cannot supply power to the temperature regulating system. At this time, the temperature regulating system will be powered by a low-voltage battery for a short time. However, when the low-voltage battery is depleted, it will also cause the temperature regulating system to fail to operate. When the temperature regulating system cannot operate, the temperature regulating system cannot cool the battery pack, resulting in the failure of the entire battery thermal management system.

(2) In the case that the battery pack is normal and the temperature regulating system is damaged, the temperature regulating system cannot cool the battery pack. When the vehicle operates normally at full power and full performance, the temperature of the battery pack will rise. However, when the temperature regulating system is damaged, it will not be able to cool the battery pack, and the temperature of the battery pack will continue to rise, which will result in a safety risk of the vehicle. If a solution of limiting the operation of the vehicle at full power and full performance is adopted, the temperature of the battery pack will not rise, but it will also affect the user experience of normal use of the vehicle.

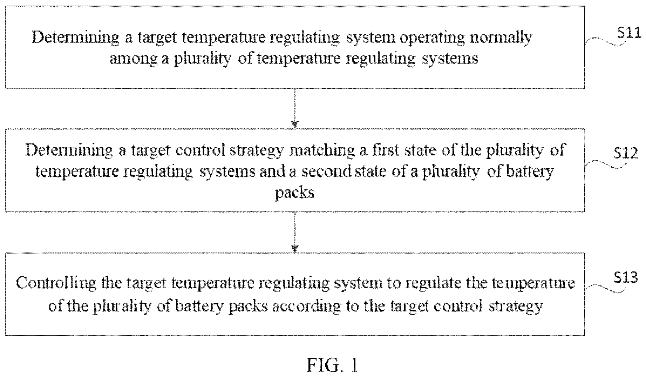

Based on this, the present invention proposes a temperature control method. FIG. 1 shows a flowchart of a temperature control method according to an exemplary embodiment, and as shown in FIG. 1, the following steps are included.

In step S11, a target temperature regulating system operating normally among a plurality of temperature regulating systems is determined.

In order to avoid the defect of being unable to regulate the temperature of the battery pack after the temperature regulating system is damaged, the plurality of temperature regulating systems are provided in the present invention, and the target temperature regulating system operating normally is selected from the plurality of temperature regulating systems to cool the battery pack.

For example, taking the plurality of temperature regulating systems including a first temperature regulating system and a second temperature regulating system as an example, when the first temperature regulating system is damaged, the second temperature regulating system is the target temperature regulating system, and the second temperature regulating system continues to regulate the temperature of the battery pack, to ensure that the battery pack operates within the appropriate ambient temperature.

Due to the provision of the plurality of temperature regulating systems, even when the vehicle is operating at full power and full performance, the normal target temperature regulating system will also cool the battery pack to avoid overheating and failure of the battery pack, and the battery pack may continuously provide power to the vehicle at full power and full performance.

In step S12, a target control strategy matching a first state of the plurality of temperature regulating systems and a second state of a plurality of battery packs is determined.

In order to avoid the defect of being unable to supply power to the temperature regulating system after the battery pack is damaged, a plurality of battery packs are provided in the present invention. When part of the plurality of battery packs is damaged, the temperature regulating system may be continuously powered through another part of the battery packs.

For example, taking the plurality of battery packs including a first battery pack and a second battery pack as an example, when the first battery pack is damaged, the second battery pack will continue to provide power to the temperature regulating system, avoiding the situation where the temperature regulating system can no longer operate after a certain time. Furthermore, after the second battery pack continues to supply power to the temperature regulating system, the temperature regulating system will also in turn regulate the temperature of the battery pack, to ensure that the second battery pack may continue to operate normally.

The plurality of temperature regulating systems may be in a plurality of first states. Taking the plurality of temperature regulating systems including the first temperature regulating system and the second temperature regulating system as an example, the first state includes any one of a state where the first temperature regulating system and the second temperature regulating system are abnormal, a state where the first temperature regulating system and the second temperature regulating system operate normally, a state where the first temperature regulating system is abnormal and the second temperature regulating system operates normally, or a state where the first temperature regulating system operates normally and the second temperature regulating system is abnormal. The vehicle will switch between these four first states in different driving environments.

The plurality of battery packs may be in a plurality of second states. Taking the plurality of battery packs including the first battery pack and the second battery pack as an example, the second state includes any one of a state where the first battery pack and the second battery pack operate normally, a state where the first battery pack and the second battery pack are damaged, a state where the first battery pack operates normally and the second battery pack is abnormal, or a state where the second battery pack operates normally and the first battery pack is abnormal. The vehicle will switch between these four second states in different driving environments. An abnormal state of the first battery pack includes any one of three states: damage, thermal failure, or thermal spread of the first battery pack; and an abnormal state of the second battery pack includes any one of three states: damage, thermal failure, or thermal spread of the second battery pack.

Damage of the battery pack means that the battery pack is damaged by an external force and cannot be temporarily restored for use. Thermal failure of the battery pack means that the temperature of the battery pack exceeds a temperature threshold, causing the battery pack to be unable to function properly. The severity of the thermal spread of the battery packs is higher than the severity of thermal failure. For example, the battery pack includes four battery cells A to D. When the battery cell A experiences thermal failure but it has not spread to the battery cells B to D, it indicates that the battery pack is in the state of thermal failure; when the battery cell A experiences thermal failure and it has spread to the battery cells B~D, it indicates that the battery pack is in the state of thermal spread.

The above four first states and the above four second states may be combined pairwise, and each combination corresponds to one target control strategy. The present invention will adopt the target control strategy corresponding to the first state and the second state to control the temperature regulating system and the battery pack.

For example, in the case that the plurality of temperature regulating systems operate normally and the plurality of battery packs operate normally, the corresponding target control strategy may be to control the plurality of temperature regulating systems to regulate the temperature of the plurality of battery packs respectively, and control the plurality of battery packs to supply power to the plurality of temperature regulating systems respectively. For example, the plurality of temperature regulating systems include a temperature regulating system A, a temperature regulating system B, and a temperature regulating system C, and the plurality of battery packs include a battery pack A, a battery pack B, and a battery pack C, then the temperature regulating system A may regulate the temperature of the battery pack A, the temperature regulating system B may regulate the temperature of the battery pack B, and the temperature regulating system C may regulate the temperature of the battery pack C. Similarly, the battery pack A may supply power to the temperature regulating system A, the battery pack B may supply power to the temperature regulating system B, and the temperature regulating system C may supply power to the temperature regulating system C.

In step S 13, the target temperature regulating system is controlled to regulate the temperature of the plurality of battery packs according to the target control strategy.

The target control strategy not only includes a control strategy of controlling the target temperature regulating system to regulate the temperature of the battery pack, but also includes a control strategy of supplying power to the target temperature regulating system by the battery pack. A target battery pack operating normally may be selected from the plurality of battery packs, and the target battery pack is controlled to supply power to the target temperature regulating system according to the target control strategy.

It may be understood that the temperature regulating referred to in the present invention includes cooling and heating. The temperature regulating system may cool and lower the temperature of the battery pack, thereby ensuring that the battery pack maintains a suitable battery temperature at a high ambient temperature; and may also heat the battery pack, thereby ensuring that the battery pack maintains a suitable battery temperature at a low ambient temperature.

In the above technical solution, firstly, due to the plurality of temperature regulating systems proposed by the present invention, when part of the temperature regulating systems is abnormal, another part of the temperature regulating systems may continue to regulate the temperature of the battery pack to prevent the temperature of the battery pack from continuously rising, so that the battery pack operates within a reasonable temperature range, and the battery pack may also provide power support for the full power and full performance operation of the vehicle. Secondly, due to the plurality of battery packs proposed by the present invention, when part of the battery packs is abnormal, another part of the battery packs may continue to supply power to the temperature regulating system, so that the temperature regulating system may operate for a long time with power and also cool the normally operating battery packs for a long time, avoiding abnormal states such as thermal failure or thermal spread of the battery pack due to excessive temperature.

A specific embodiment involved in the step S13 is described below, which is used to explain the target control strategy that controls the target temperature regulating system to cool the plurality of battery packs. Essentially, it is to control a communication state of a multi-way valve, so that the target temperature regulating system and the plurality of battery packs are in different temperature regulating scenarios.

The communication state of the multi-way valve may be controlled according to the target control strategy, and then the target temperature regulating system may be controlled to regulate the temperature of the plurality of battery packs.

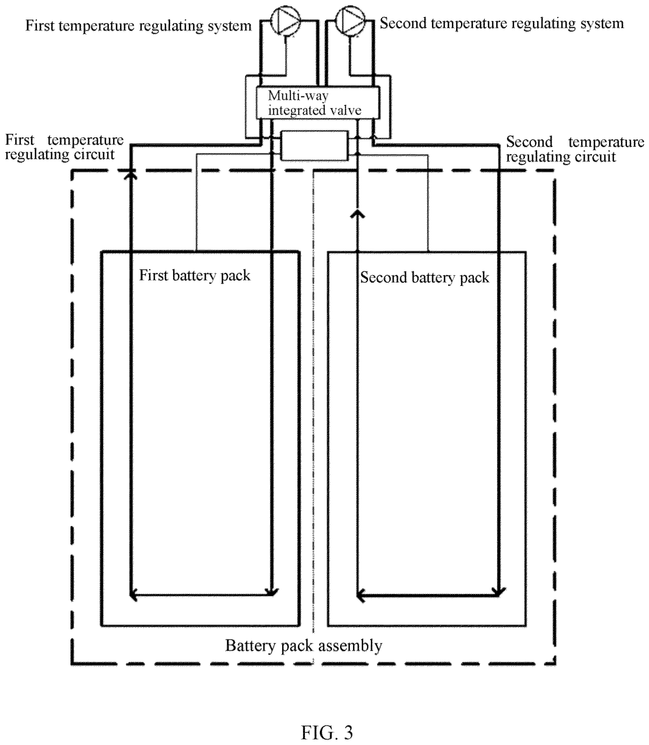

Referring to FIG. 3, the multi-way valve may be a multi-way integrated valve, a side of the multi-way integrated valve is connected to the first temperature regulating system and the second temperature regulating system, and the other side of the multi-way integrated valve is connected to the first battery pack and the second battery pack.

The multi-way integrated valve is configured to control connection states between different temperature regulating systems and different battery packs. For example, it is also possible to control the multi-way integrated valve to communicate the first temperature regulating system with a first temperature regulating circuit of the first battery pack, so that the first temperature regulating system regulates the temperature of the first battery pack; it is also possible to control the multi-way integrated valve to communicate the second temperature regulating system with a second temperature regulating circuit of the second battery pack, so that the second temperature regulating system regulates the temperature of the second battery pack; it is also possible to control the multi-way integrated valve to communicate the first temperature regulating system with the second temperature regulating circuit of the second battery pack, so that the first temperature regulating system regulates the temperature of the second battery pack; and it is also possible to control the multi-way integrated valve to communicate the second temperature regulating system with the first temperature regulating circuit of the first battery pack, so that the second temperature regulating system regulates the temperature of the first battery pack.

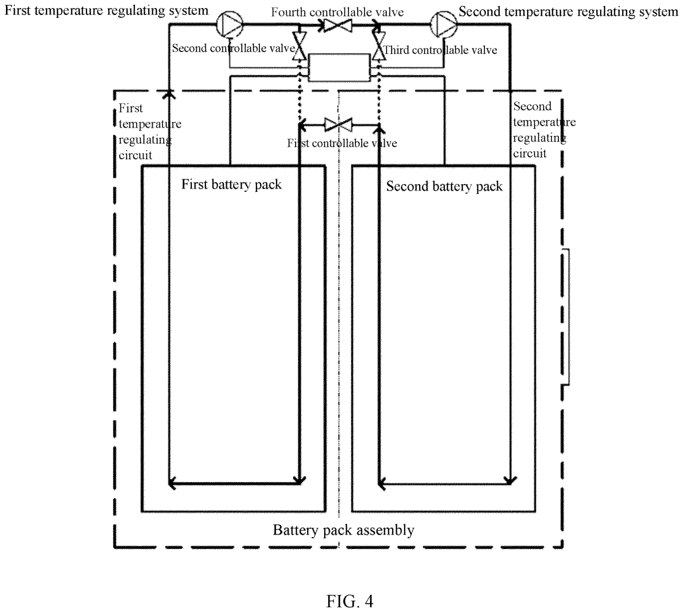

Referring to FIG. 4, the multi-way integrated valve may also include a first controllable valve, a second controllable valve, a third controllable valve, and a fourth controllable valve. A first end of the first controllable valve is connected to the first battery pack and the first temperature regulating system, and a second end of the first controllable valve is connected to the second battery pack and the second temperature regulating system; a first end of the second controllable valve is connected to the first end of the first controllable valve, and a second end of the second controllable valve is connected between the first temperature regulating system and the second temperature regulating system; a first end of the third controllable valve is connected to the second end of the first controllable valve, and a second end of the third controllable valve is connected between the second controllable valve and the second temperature regulating system; and the fourth controllable valve is connected between the second controllable valve and the third controllable valve.

The first controllable valve may control communication of a circuit between the first temperature regulating circuit and the second temperature regulating circuit, and the fourth controllable valve may control communication of a circuit between the first temperature regulating system and the second temperature regulating system. The second controllable valve may control communication of a circuit between the first temperature regulating system and the first temperature regulating circuit, and the third controllable valve may control communication of a circuit between the second temperature regulating system and the second temperature regulating circuit.

It may be understood that the multi-way valve may not only control the first temperature regulating system and the second temperature regulating system to be in different states such as operating in parallel, operating in series, and operating independently, but also control the first temperature regulating circuit and the second temperature regulating circuit to be in different states such as operating in parallel, operating in series, and operating independently.

Through the above technical solution, by controlling on/off states of the first controllable valve, the second controllable valve, the third controllable valve, and the fourth controllable valve, or controlling on/off states of the multi-way integrated valve in each channel, a plurality of scenarios may be achieved, such as parallel connection of the first temperature regulating system and the second temperature regulating system to regulate the temperature of the first battery pack and the second battery pack, series connection of the first temperature regulating system and the second temperature regulating system to regulate the temperature of the first battery pack and the second battery pack, independent temperature regulating of the first temperature regulating system to the first battery pack and/or the second battery pack, and independent temperature regulating of the second temperature regulating system to the first battery pack and/or the second battery pack, thus adapting to various operating conditions of the vehicle.

A specific embodiment involved in the steps S12 and S 13 is described below, taking the plurality of temperature regulating systems including the first temperature regulating system and the second temperature regulating system, the plurality of battery packs including the first battery pack and the second battery pack, the first battery pack having the first temperature regulating circuit, and the second battery pack having the second temperature regulating circuit as an example, this embodiment is used to explain the target control strategy in different scenarios when the first temperature regulating system and the second temperature regulating system of the vehicle operate normally in the first state, and the first battery pack and the second battery pack operates normally in the second state. This target control strategy is referred to as a first control strategy in this embodiment, and the first temperature regulating system and the second temperature regulating system are controlled to regulate the temperature of the first battery pack and the second battery pack according to the first control strategy. The following examples are all based on the multi-way integrated valve, and are also applicable to the first controllable valve, the second controllable valve, the third controllable valve, and the fourth controllable valve, which are not repeated here.

In a first scenario, the first temperature regulating system is controlled to communicate with the first temperature regulating circuit of the first battery pack, and the second temperature regulating system is controlled to communicate with the second temperature regulating circuit of the second battery pack.

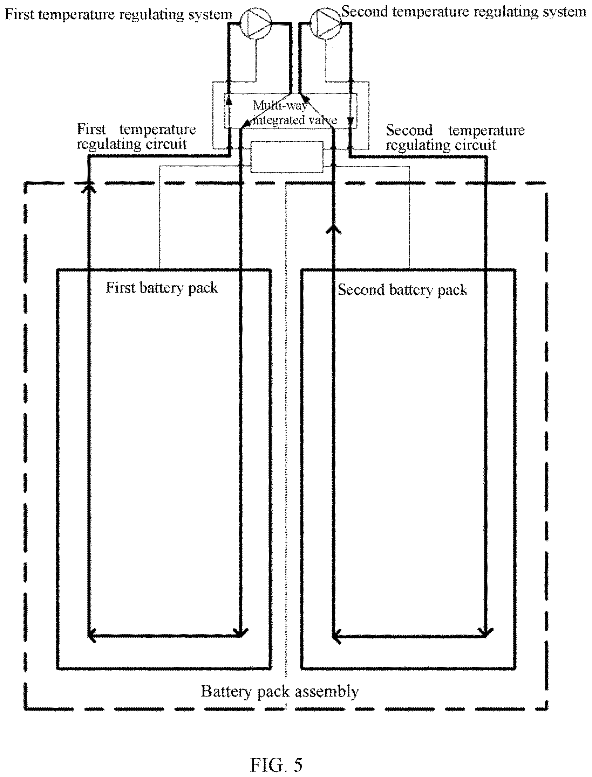

Referring to a scenario shown in FIG. 5 where the first temperature regulating system and the second temperature regulating system independently regulate temperature, in this scenario, the first temperature regulating system is configured to regulate temperature of the first battery pack, and the second temperature regulating system is configured to regulate temperature of the second battery pack. Therefore, the multi-way integrated valve may be controlled to communicate the first temperature regulating system with the first temperature regulating circuit of the first battery pack. A temperature regulating liquid output by the first temperature regulating system enters the first temperature regulating circuit of the first battery pack through the multi-way integrated valve, so that the temperature regulating liquid output by the first temperature regulating system may regulate the temperature of the first battery pack. Furthermore, the temperature regulating liquid returned from the first battery pack is returned to the first temperature regulating system through the multi-way integrated valve. The multi-way integrated valve may also be controlled to communicate the second temperature regulating system with the second temperature regulating circuit of the second battery pack. The temperature regulating liquid output by the second temperature regulating system enters the second temperature regulating circuit of the second battery pack through the multi-way integrated valve, so that the temperature regulating liquid output by the second temperature regulating system may regulate the temperature of the second battery pack. Furthermore, the temperature regulating liquid returned from the second temperature regulating circuit may also be returned to the second temperature regulating system through the multi-way integrated valve.

For example, when a temperature difference between the first battery pack and the second battery pack is large, if a temperature of the first battery pack is greater than a temperature of the second battery pack, a temperature of the temperature regulating liquid output by the first temperature regulating system may be controlled to be lower, to cool the first battery pack more quickly, and the temperature regulating liquid output by the second temperature regulating system is controlled to be relatively high, to regulate the temperature of the second battery pack more slowly, so that the temperature difference between the first battery pack and the second battery pack is gradually reduced, to avoid the performance loss and safety risk of two battery packs due to large temperature difference.

For example, when a user is driving a vehicle in a city, the vehicle cannot drive fast in the city, and the power level required by the vehicle in this scenario is average. At this time, the vehicle may be powered by any one of the first battery pack and the second battery pack, and the power demand of the vehicle may also be satisfied. Therefore, any one of the first battery pack and the second battery pack may be controlled to operate. If the first battery pack operates, the temperature of the first battery pack is regulated through the first temperature regulating system; and if the second battery pack operates, the temperature of the second battery pack is regulated through the second temperature regulating system.

In a second scenario, the first temperature regulating system, the second temperature regulating system, the first temperature regulating circuit of the first battery pack, and the second temperature regulating circuit of the second battery pack are controlled to form a series circuit.

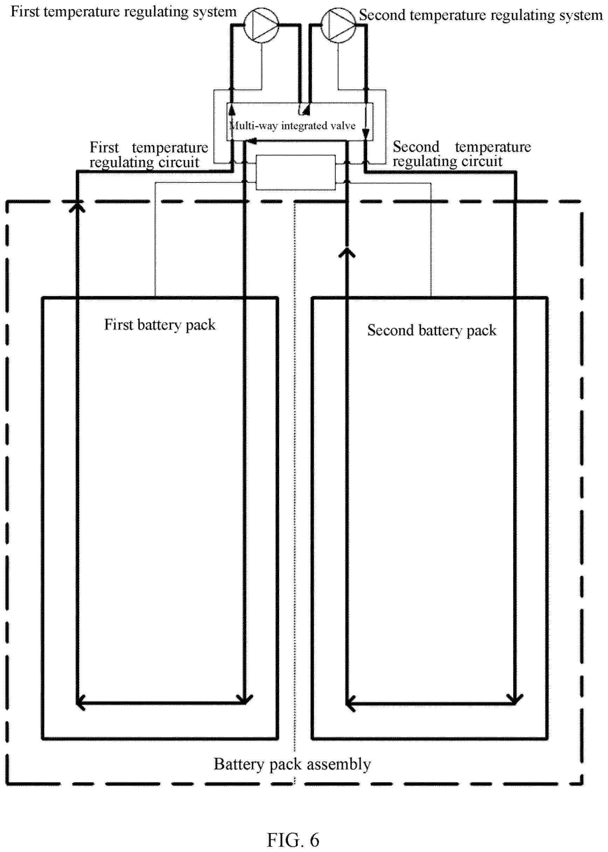

Referring to the scenario shown in FIG. 6 where the first temperature regulating system and the second temperature regulating system are operating in series, and the first temperature regulating system and the second temperature regulating system are connected in series to regulate the temperature of the first battery pack and the second battery pack. Therefore, the multi-way integrated valve may be controlled to make the circuit between the first temperature regulating system and the second temperature regulating system communicate, to make the circuit between the first temperature regulating circuit of the first battery pack and the second temperature regulating circuit of the second battery pack communicate, to make the circuit between the first temperature regulating system and the first temperature regulating circuit communicate, and to make the circuit between the second temperature regulating system and the second temperature regulating circuit communicate.

In this way, the temperature regulating liquid output from the first temperature regulating system is transmitted to the second temperature regulating system through the multi-way integrated valve, then the temperature regulating liquid output from the second temperature regulating system is transmitted to the second temperature regulating circuit through the multi-way integrated valve, and the temperature regulating liquid output from the second temperature regulating circuit is transmitted to the first temperature regulating circuit through the multi-way integrated valve; and the temperature regulating liquid output from the first temperature regulating circuit is returned to the first temperature regulating system through the multi-way integrated valve. The temperature regulating liquid passing through the first temperature regulating circuit regulates the temperature of the first battery pack, and the temperature regulating liquid passing through the second temperature regulating circuit regulates the temperature of the second battery pack.

It may be seen that in the scenario where the first temperature regulating system and the second temperature regulating system operate in series, and the first temperature regulating circuit and the second temperature regulating circuit operate in series, a temperature regulating pipeline is extended, so that temperature regulating time becomes longer, for example, cooling time for the first battery pack and the second battery pack becomes longer.

For example, when the vehicle is at a high ambient temperature, the temperature of the first battery pack and the second battery pack on the vehicle will also be high. Therefore, it is necessary to cool the first battery pack and the second battery pack with a temperature regulating liquid at a lower temperature. At this time, the multi-way integrated valve may be controlled to communicate the first temperature regulating system with the second temperature regulating system, and the multi-way integrated valve may be controlled to communicate the first temperature regulating circuit with the second temperature regulating circuit. A heat exchange pipeline formed by the connection in series of the first temperature regulating system, the second temperature regulating system, the first temperature regulating circuit, and the second temperature regulating circuit is longer, then the residence time of the temperature regulating liquid in the heat exchange pipeline will also be longer, and the cooling time for the first battery pack and the second battery pack will also be longer, so that the first battery pack and the second battery pack are regulated to a relatively low temperature, avoiding overheating and failure of the first battery pack and the second battery pack at a high ambient temperature.

In a third scenario, the first temperature regulating system is controlled to communicate with the first temperature regulating circuit of the first battery pack and the second temperature regulating circuit of the second battery pack, and the second temperature regulating system is controlled to communicate with the first temperature regulating circuit and the second temperature regulating circuit.

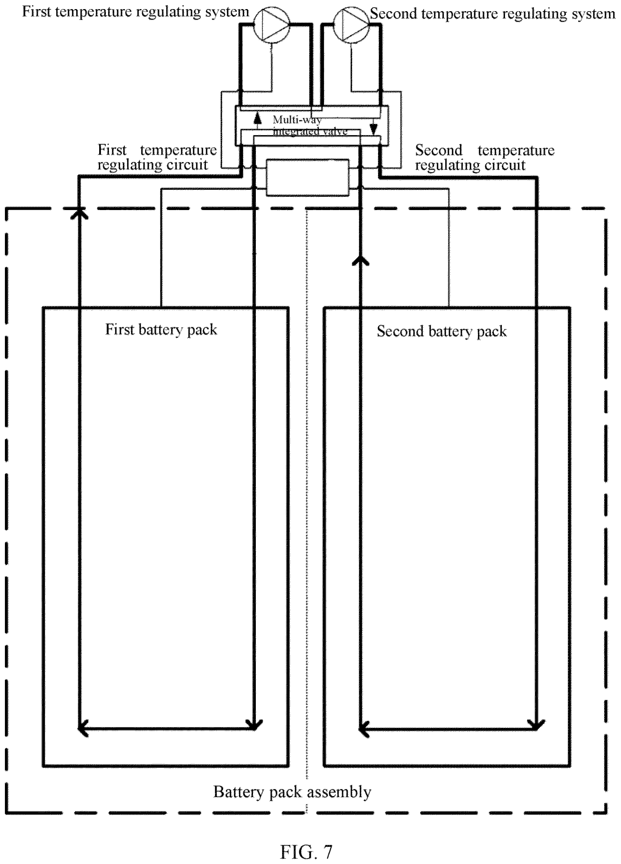

Referring to the scenario shown in FIG. 7 where the first temperature regulating system and the second temperature regulating system are operating in parallel, and the first temperature regulating system and the second temperature regulating system are connected in parallel to regulate the temperature of the first battery pack and the second battery pack. Therefore, the multi-way integrated valve may be controlled to communicate the first temperature regulating system with the first temperature regulating circuit and the second temperature regulating circuit, so that the temperature regulating liquid output by the first temperature regulating system is simultaneously input into the first temperature regulating circuit and the second temperature regulating circuit, allowing the first temperature regulating system to simultaneously regulate the temperature of the first battery pack and the second battery pack; and the multi-way integrated valve is controlled to communicate the second temperature regulating system with the first temperature regulating circuit and the second temperature regulating circuit, so that the temperature regulating liquid output by the second temperature regulating system is simultaneously input into the first temperature regulating circuit and the second temperature regulating circuit, allowing the second temperature regulating system to simultaneously regulate the temperature of the first battery pack and the second battery pack.

It may be seen that after the first temperature regulating system and the second temperature regulating system are connected in parallel, the temperature regulating liquid output by the first temperature regulating system and the second temperature regulating system will be simultaneously input into the first temperature regulating circuit, so that the flow rate of the temperature regulating liquid in the first temperature regulating circuit is increased. After the flow rate of the temperature regulating liquid in the first temperature regulating circuit is increased, heat exchange may be achieved faster, to quickly regulate the temperature of the first battery pack; similarly, the temperature regulating liquid output from the first temperature regulating system and the second temperature regulating system will also be simultaneously input into the second temperature regulating circuit, quickly regulating the temperature of the second battery pack.

For example, when the first battery pack experiences thermal runaway, the first battery pack may burn and cause the vehicle to catch fire. In this case, it is necessary to quickly cool the first battery pack to avoid conversion of the first battery pack from a thermal runaway state to a thermal spread state. In this scenario, the first temperature regulating system may be controlled to be connected in parallel with the second temperature regulating system, so that the temperature regulating liquid output by the first temperature regulating system and the second temperature regulating system may be simultaneously input into the first temperature regulating circuit. After the flow rate of the temperature regulating liquid in the first temperature regulating circuit is increased, the first battery pack may be cooled more quickly, avoiding the continuous deterioration of thermal runaway phenomenon of the first battery pack, and also buying time for passengers in the vehicle to escape.

A specific embodiment involved in the steps S12 and S 13 is described below, taking the plurality of temperature regulating systems including the first temperature regulating system and the second temperature regulating system, the plurality of battery packs including the first battery pack and the second battery pack, the first battery pack having the first temperature regulating circuit, and the second battery pack having the second temperature regulating circuit as an example, this embodiment is used to explain the target control strategy in different scenarios when the first temperature regulating system of the vehicle operates normally and the second temperature regulating system is abnormal in the first state, and the first battery pack and the second battery pack operates normally in the second state. This target control strategy is referred to as a second control strategy in this embodiment, and the first temperature regulating system is controlled to regulate the temperature of the first battery pack and the second battery pack according to the second control strategy. The following examples are all based on the multi-way integrated valve, and are also applicable to the first controllable valve, the second controllable valve, the third controllable valve, and the fourth controllable valve, which are not repeated here.

In the first scenario, the first temperature regulating system is controlled to communicate with the first temperature regulating circuit of the first battery pack and the second temperature regulating circuit of the second battery pack.

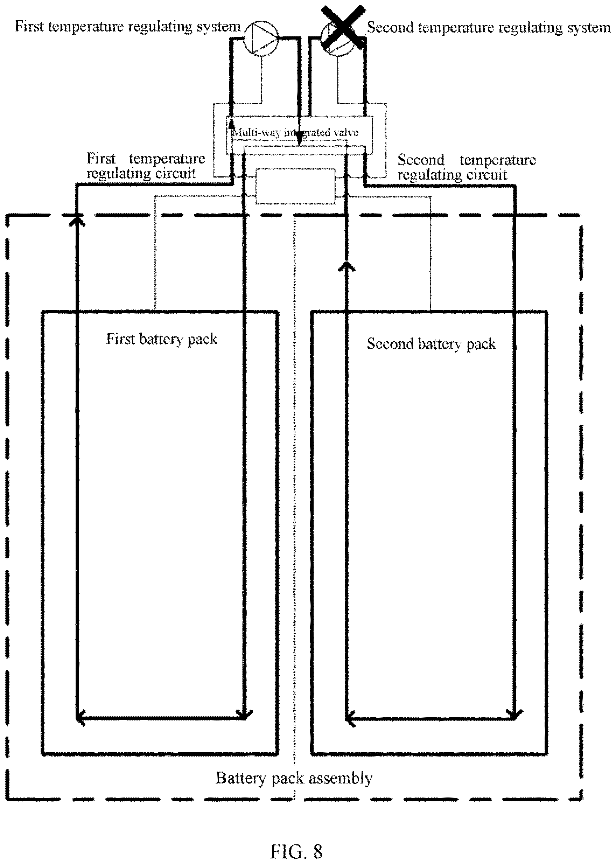

Referring the scenario shown in FIG. 8 where the first temperature regulating system independently regulates the temperature of the first battery pack and the second battery pack, and the first temperature regulating system inputs the temperature regulating liquid to the first temperature regulating circuit and the second temperature regulating circuit connected in parallel. Due to the abnormality of the second temperature regulating system, the second temperature regulating system cannot regulate the temperature of the first battery pack and the second battery pack, while the first temperature regulating system is normal, therefore, the first temperature regulating system may regulate the temperature of the first battery pack and the second battery pack simultaneously.

The multi-way integrated valve may be controlled to communicate the first temperature regulating circuit with the second temperature regulating circuit in parallel, the multi-way integrated valve is controlled to communicate the first temperature regulating system with the first temperature regulating circuit, and the multi-way integrated valve is controlled to communicate the first temperature regulating system with the second temperature regulating circuit. Therefore, the temperature regulating liquid output from the first temperature regulating system will simultaneously enter the first temperature regulating circuit and the second temperature regulating circuit through the multi-way integrated valve, and the temperature regulating liquid returned from the first temperature regulating circuit and the second temperature regulating circuit will also simultaneously return to the first temperature regulating system through the multi-way integrated valve.

For example, when the first battery pack and the second battery pack operate independently and respectively supply power to the high-voltage load or low-voltage load of the vehicle, once either battery pack is damaged, the other battery pack will continue to supply power to the high-voltage load or low-voltage load of the vehicle, ensuring normal operation of the vehicle. In this scenario, the temperature regulating liquid output from the first temperature regulating system may be controlled to simultaneously enter the first temperature regulating circuit and the second temperature regulating circuit. The temperature regulating liquid passing through the first temperature regulating circuit and the second temperature regulating circuit will cool the first battery pack and the second battery pack, thereby reducing the temperature of the first battery pack and the second battery pack. During this process, since the first temperature regulating circuit is connected in parallel with the second temperature regulating circuit, if the first temperature regulating circuit is damaged, it will not affect the first temperature regulating system to regulate the temperature of the second battery pack through the second temperature regulating circuit; if the second temperature regulating circuit is damaged, it will not affect the first temperature regulating system to regulate the temperature of the first battery pack through the first temperature regulating circuit. It may be seen that the first temperature regulating circuit and the second temperature regulating circuit are connected in parallel, which may ensure that two temperature regulating circuits operate independently and do not affect each other.

In the second scenario, the first temperature regulating system, the first temperature regulating circuit of the first battery pack, and the second temperature regulating circuit of the second battery pack are controlled to form a series circuit.

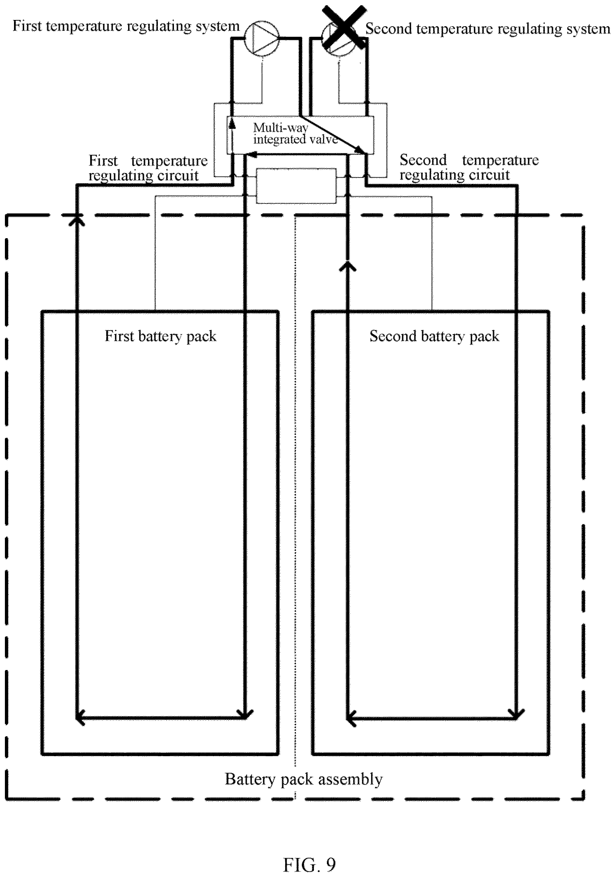

Referring to the scenario shown FIG. 9 where the first temperature regulating system independently regulate the temperature of the first battery pack and the second battery pack, and the first temperature regulating system regulates the temperature of the first battery pack and the second battery pack connected in series. Since the second temperature regulating system is abnormal, it cannot regulate the temperature of the first battery pack and the second battery pack, while the first temperature regulating system is normal, therefore, the first temperature regulating system may simultaneously regulate the temperature of the first battery pack and the second battery pack.

The multi-way integrated valve may be controlled to communicate the first temperature regulating circuit with the second temperature regulating circuit in series, the multi-way integrated valve is controlled to communicate the first temperature regulating system with the first temperature regulating circuit, and the multi-way integrated valve is controlled to communicate the first temperature regulating system with the second temperature regulating circuit. Therefore, the temperature regulating liquid output from the first temperature regulating system will enter the second temperature regulating circuit through the multi-way integrated valve, and the temperature regulating liquid output from the second temperature regulating circuit will be transmitted to the first temperature regulating circuit through the multi-way integrated valve; and the temperature regulating liquid output from the first temperature regulating circuit returns to the first temperature regulating system through the multi-way integrated valve.

For example, taking the voltage of the first battery pack and the second battery pack being 400V as an example, when the first battery pack and the second battery pack are connected in series, there is a total voltage of 800V, which may provide great power to the vehicle, and the temperature generated by the first battery pack and the second battery pack is also high while providing great power. In this scenario, the first temperature regulating system, the first temperature regulating circuit, and the second temperature regulating circuit may be controlled to form a series circuit, and a heat exchange pipeline of this series circuit is longer, so that the residence time of the temperature regulating liquid in the pipeline is longer, and the first battery pack and the second battery pack reach a lower temperature, avoiding thermal failure caused by excessive temperature of the first battery pack and the second battery pack.

A specific embodiment involved in the steps S12 and S13 is described below, taking the plurality of temperature regulating systems including the first temperature regulating system and the second temperature regulating system, the plurality of battery packs including the first battery pack and the second battery pack, the first battery pack having the first temperature regulating circuit, and the second battery pack having the second temperature regulating circuit as an example, this embodiment is used to explain the target control strategy in different scenarios when the first temperature regulating system of the vehicle operates normally and the second temperature regulating system is abnormal in the first state, and any one of the first battery pack and the second battery pack is abnormal in the second state. This target control strategy is referred to as a third control strategy in this embodiment, and the first temperature regulating system is controlled to regulate the temperature of the first battery pack and the second battery pack according to the third control strategy. The following examples are all based on the multi-way integrated valve, and are also applicable to the first controllable valve, the second controllable valve, the third controllable valve, and the fourth controllable valve, which are not repeated here.

In the first scenario, when the first temperature regulating system is normal, the second temperature regulating system is abnormal, the first battery pack is normal, and the second battery pack is damaged, the first temperature regulating system is controlled to communicate with the first temperature regulating circuit of the first battery pack.

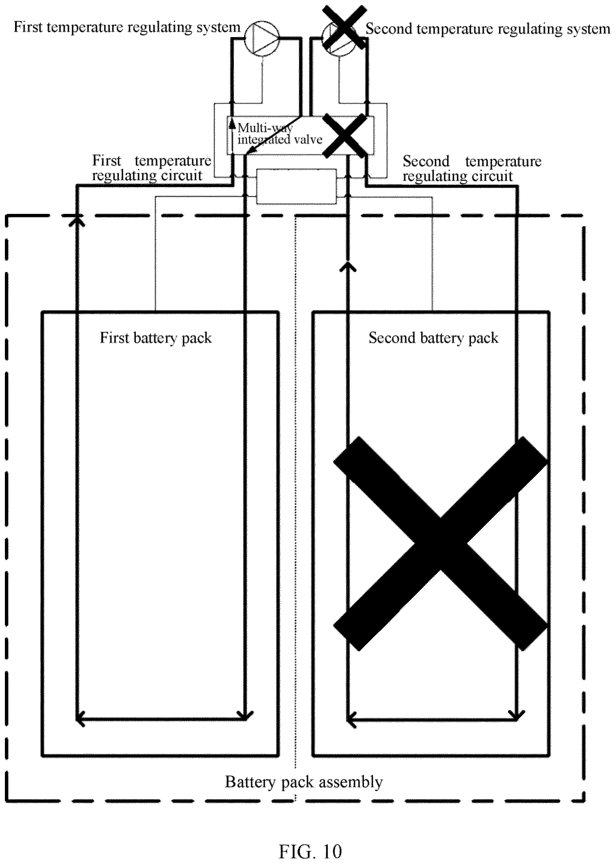

Referring to a schematic diagram of one temperature regulating system regulating temperature of one battery pack shown in FIG. 10. The damage of the second battery pack refers to the situation where the second battery pack is not damaged due to excessive temperature, but cannot continue to be used due to external forces or reaching the limit of its own life. At this time, the first temperature regulating system may be controlled to communicate with the first temperature regulating circuit, and the temperature of the first battery pack may be regulated by the first temperature regulating system.

The multi-way integrated valve may be controlled to communicate the first temperature regulating system with the first temperature regulating circuit, then the temperature regulating liquid output from the first temperature regulating system will be transmitted to the first temperature regulating circuit through the multi-way integrated valve, and the temperature regulating liquid returned from the first temperature regulating circuit will also return to the first temperature regulating system through the multi-way integrated valve. The temperature regulating liquid passing through the first temperature regulating circuit exchanges heat with the first battery pack to regulate the temperature of the first battery pack.

For example, in the case that the second battery pack is damaged, even if the second battery pack is cooled down, the second battery pack will not return to normal use state. Therefore, there is no need to cool the second battery pack. At this time, the first temperature regulating system may be used to cool the first battery pack, ensuring the normal use of the first battery pack and further ensuring the normal operation of the vehicle.

In a second scenario, in the case that the first temperature regulating system is normal, the second temperature regulating system is abnormal, the first battery pack is damaged, and the second battery pack is normal, the first temperature regulating system is controlled to communicate with the second temperature regulating circuit of the second battery pack.

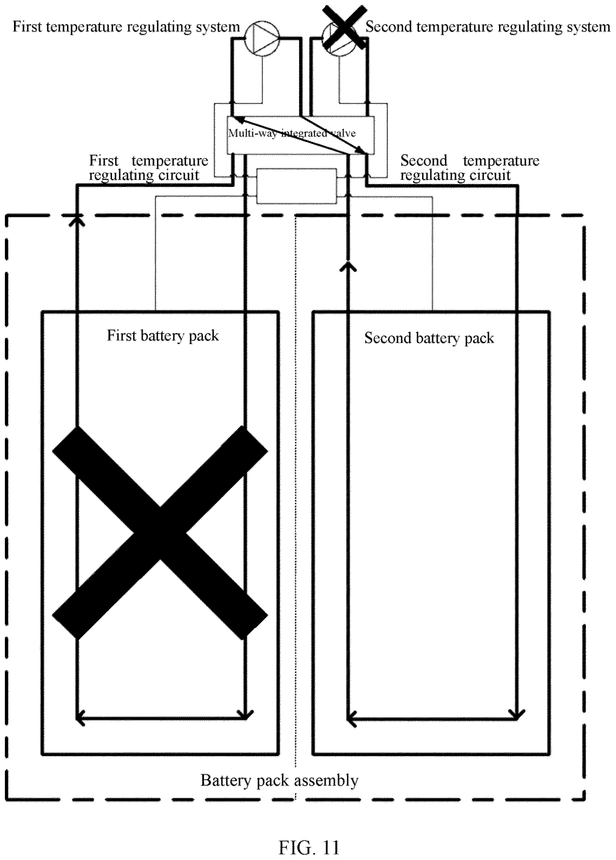

Referring to a schematic diagram of one temperature regulating system regulating the temperature of the battery pack in a staggered manner shown in FIG. 11. The damage of the first battery pack refers to the situation where the first battery pack is not damaged due to excessive temperature, but cannot continue to be used due to external forces or reaching the limit of its own life. At this time, the first temperature regulating system may be controlled to communicate with the second temperature regulating circuit, and the temperature of the second battery pack may be regulated by the first temperature regulating system.

The multi-way integrated valve may be controlled to communicate the first temperature regulating system with the second temperature regulating circuit, then the temperature regulating liquid output from the first temperature regulating system will be transmitted to the second temperature regulating circuit through the multi-way integrated valve, and the temperature regulating liquid returned from the second temperature regulating circuit will also return to the first temperature regulating system through the multi-way integrated valve. The temperature regulating liquid passing through the second temperature regulating circuit exchanges heat with the second battery pack to regulate the temperature of the second battery pack.

For example, in the case that the first battery pack is damaged, even if the first battery pack is cooled down, the first battery pack will not return to normal use state. Therefore, there is no need to cool the first battery pack. At this time, the first temperature regulating system may be used to cool the second battery pack, ensuring the normal use of the second battery pack and further ensuring the normal operation of the vehicle.

It may be understood that controlling the state of the multi-way integrated valve in the present invention may not only control the first temperature regulating system to regulate the temperature of the first battery pack, but also control the first temperature regulating system to regulate the temperature of the second battery pack in a staggered manner.

In a third scenario, in the case that the first temperature regulating system is normal, the second temperature regulating system is abnormal, the first battery pack is normal, and the temperature of the battery pack exceeds a temperature threshold, the first temperature regulating system is controlled to communicate with the second temperature regulating circuit of the second battery pack.

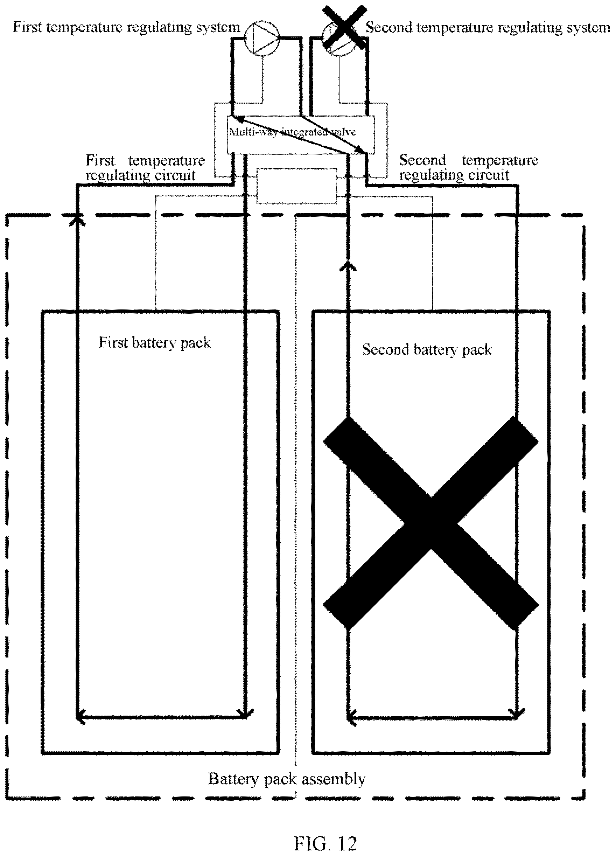

Referring to a cooling schematic diagram in the scenario of thermal failure of the battery pack shown in FIG. 12. The temperature of the second battery pack exceeds the temperature threshold, which indicates that the second battery pack is in the state of thermal failure or thermal spread. At this time, the first temperature regulating system may be controlled to communicate with the second temperature regulating circuit, and the temperature of the second battery pack may be regulated by the first temperature regulating system.

The multi-way integrated valve may be controlled to communicate the first temperature regulating system with the second temperature regulating circuit, then the temperature regulating liquid output from the first temperature regulating system will be transmitted to the second temperature regulating circuit through the multi-way integrated valve, and the temperature regulating liquid returned from the second temperature regulating circuit will also return to the first temperature regulating system through the multi-way integrated valve. The temperature regulating liquid passing through the second temperature regulating circuit exchanges heat with the second battery pack to regulate the temperature of the second battery pack.

For example, in the case that the temperature of the second battery pack exceeds the temperature threshold, it indicates that there is thermal failure or thermal spread phenomenon in the second battery pack. If the second battery pack is not cooled down in time, it will cause spontaneous combustion of the second battery pack, and posing a safety risk to the vehicle. At this time, the first temperature regulating system may be used to cool the second battery pack, thereby to some extent suppressing the continuous increase in temperature of the second battery pack and buying time for passengers in the vehicle to escape; since the temperature of the first battery pack does not exceed the temperature threshold and is normal, there is no need to cool the first battery pack.

A specific embodiment involved in the steps S12 and S 13 is described below, taking the plurality of temperature regulating systems including the first temperature regulating system and the second temperature regulating system, the plurality of battery packs including the first battery pack and the second battery pack, the first battery pack having the first temperature regulating circuit, and the second battery pack having the second temperature regulating circuit as an example, this embodiment is used to explain the target control strategy in different scenarios when the first temperature regulating system and the second temperature regulating system of the vehicle operate normally in the first state, and the second battery pack is abnormal in the second state. This target control strategy is referred to as a fourth control strategy in this embodiment, and the first temperature regulating system and the second temperature regulating system are controlled to regulate the temperature of the first battery pack and the second battery pack according to the fourth control strategy. The following examples are all based on the multi-way integrated valve, and are also applicable to the first controllable valve, the second controllable valve, the third controllable valve, and the fourth controllable valve, which are not repeated here.

In a first scenario, in the case that the abnormal state of the second battery pack is the damaged state, the first temperature regulating system is controlled to communicate with the first temperature regulating circuit of the first battery pack.

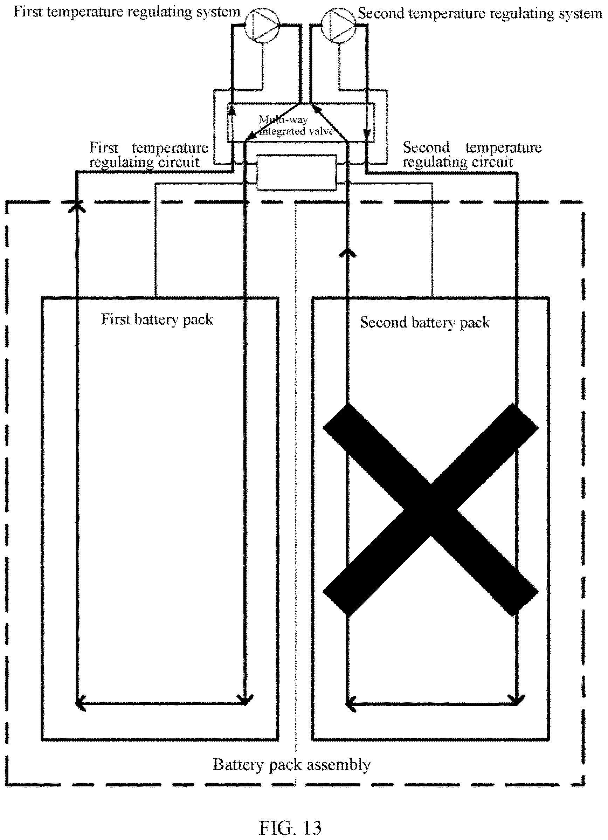

Referring to a scenario shown in FIG. 13 where the first temperature regulating system and the second temperature regulating system operate independently, the first temperature regulating system regulates the temperature of the first battery pack, and the second temperature regulating system regulates the temperature of the second battery pack. When the second battery pack is damaged, it indicates that the second battery pack cannot continue to be used. Even if the second battery pack is cooled down, the second battery pack still cannot be used normally. At this time, the multi-way integrated valve may be controlled to communicate the first temperature regulating system with the first temperature regulating circuit, and the multi-way integrated valve may be controlled not to communicate the second temperature regulating system with the second temperature regulating circuit.

In this way, the temperature regulating liquid output by the first temperature regulating system flows into the first temperature regulating circuit to regulate the temperature of the first battery pack, and the temperature regulating liquid output by the second temperature regulating system is not controlled to flow into the second temperature regulating circuit, preventing the second temperature regulating system from wasting electricity.

In a second scenario, in the case that the abnormal state of the second battery pack is the damaged state, the first temperature regulating system and the second temperature regulating system are controlled to communicate with the first temperature regulating circuit of the first battery pack.

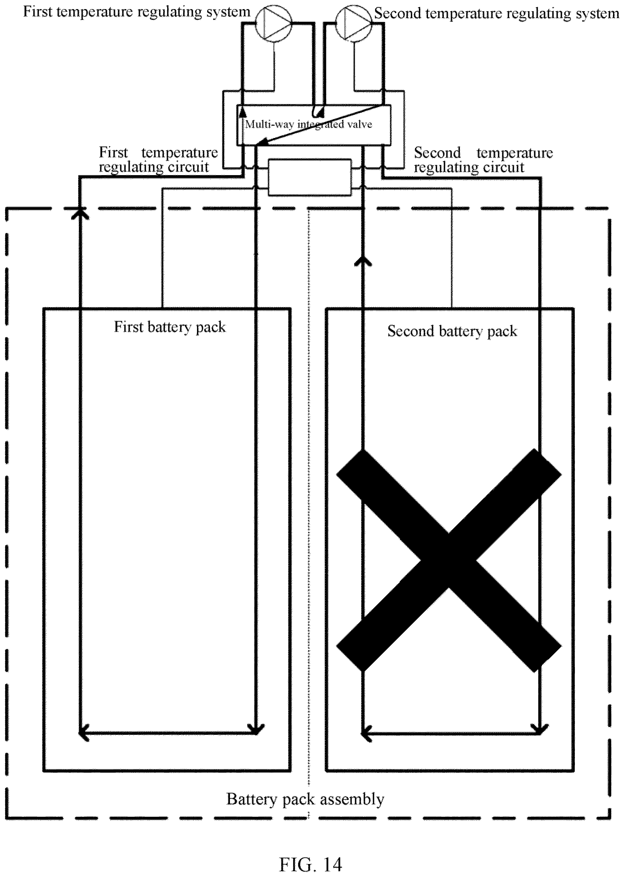

Referring to a schematic diagram of the first temperature regulating system and the second temperature regulating system regulating the temperature of the first battery pack shown in FIG. 14 in series. The damaged state of the second battery refers to the situation where the second battery pack is not damaged due to excessive temperature, but cannot continue to be used due to external forces or reaching the limit of its own life. At this time, the first temperature regulating system and the second temperature regulating system may controlled to be connected in series to regulate the temperature of the first battery pack.

The multi-way integrated valve may be controlled to communicate the first temperature regulating system with the second temperature regulating system, communicate the first temperature regulating system with the first temperature regulating circuit, and communicate the second temperature regulating system with the first temperature regulating circuit. The temperature regulating liquid output from the first temperature regulating system flows into the second temperature regulating system through the multi-way integrated valve, the temperature regulating liquid output from the second temperature regulating system is transmitted to the first temperature regulating circuit through the multi-way integrated valve, and the temperature regulating liquid output from the first temperature regulating circuit is returned to the first temperature regulating system.

For example, in the case that the vehicle is in a high ambient temperature and the second battery pack is damaged, the first battery pack is in a high temperature environment, and a cool temperature regulating liquid is required to lower the temperature of the first battery pack to a low temperature. At this time, the first temperature regulating system, the second temperature regulating system, and the first temperature regulating circuit may be controlled to be connected in series to extend the heat exchange pipeline, so that the residence time of the temperature regulating liquid in the heat exchange pipeline is longer, and the temperature regulating liquid may exchange heat with the first battery pack for a longer time, achieving better cooling effect and allowing the first battery pack to reach a low temperature.

In a third scenario, in the case that the abnormal state of the second battery pack is the damaged state, the first temperature regulating system is controlled to communicate with the first temperature regulating circuit of the first battery pack, and the second temperature regulating system is controlled to communicate with the first temperature regulating circuit.

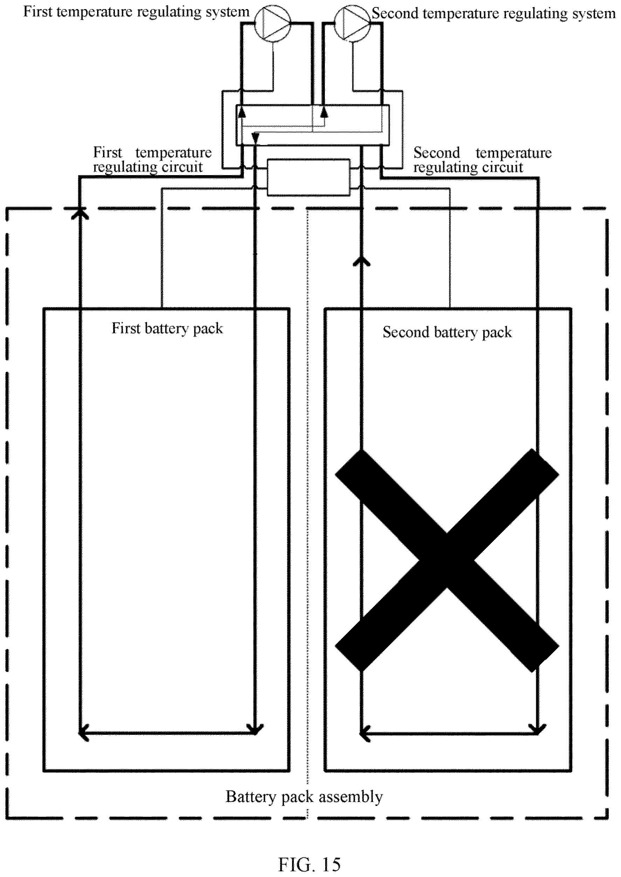

Referring to a schematic diagram of the first temperature regulating system and the second temperature regulating system regulating the temperature of the first battery pack in parallel shown in FIG. 15. The multi-way integrated valve may be controlled to communicate the first temperature regulating system with the first temperature regulating circuit, so that the temperature regulating liquid output by the first temperature regulating system may enter the first temperature regulating circuit. At the same time, the multi-way integrated valve may be controlled to communicate the second temperature regulating system with the first temperature regulating circuit, so that the temperature regulating liquid output by the second temperature regulating system may enter the first temperature regulating circuit; and the multi-way integrated valve is controlled to allow the first temperature regulating system with the second temperature regulating system to be connected in parallel, so that the first temperature regulating system and the second temperature regulating system simultaneously regulate the temperature of the first battery pack.

It may be seen that after the first temperature regulating system and the second temperature regulating system are connected in parallel, the temperature regulating liquid output by the first temperature regulating system and the second temperature regulating system will be simultaneously input into the first temperature regulating circuit, so that the flow rate of the temperature regulating liquid in the first temperature regulating circuit is increased. After the flow rate of the temperature regulating liquid in the first temperature regulating circuit is increased, heat exchange may be achieved faster, to quickly regulate the temperature of the first battery pack.

In a fourth scenario, in the case that the abnormal state of the second battery pack is the thermal spread state, the first temperature regulating system is controlled to communicate with the second temperature regulating circuit of the second battery pack, and the second temperature regulating system is controlled to communicate with the second temperature regulating circuit.

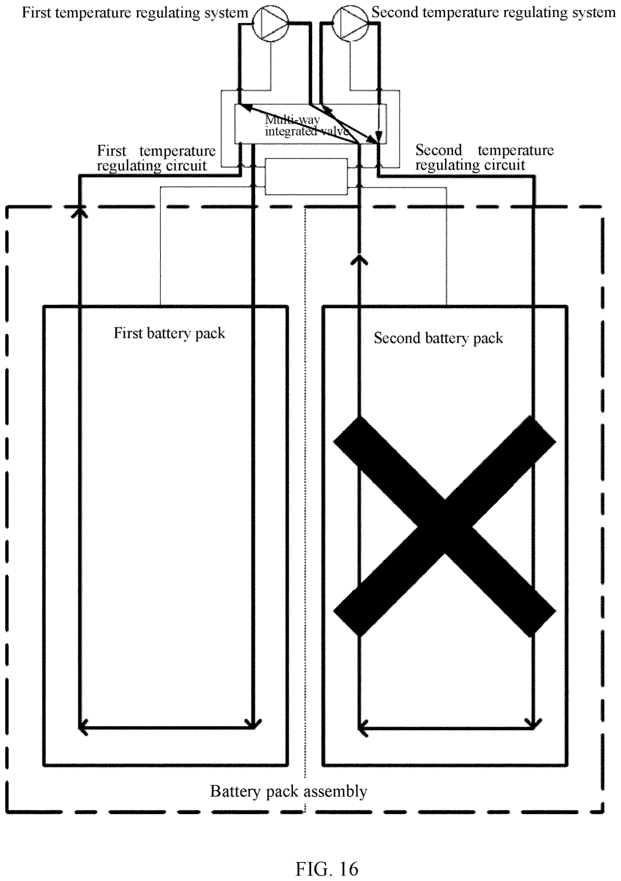

Referring to FIG. 16, which shows a schematic diagram of the first temperature regulating system and the second temperature regulating system being connected in parallel to regulate the temperature of the second battery pack. The multi-way integrated valve may be controlled to communicate the first temperature regulating system with the second temperature regulating circuit, so that the temperature regulating liquid output by the first temperature regulating system may enter the second temperature regulating circuit. At the same time, the multi-way integrated valve may be controlled to communicate the second temperature regulating system with the second temperature regulating circuit, so that the temperature regulating liquid output by the second temperature regulating system may enter the second temperature regulating circuit; and the multi-way integrated valve is controlled to allow the first temperature regulating system and the second temperature regulating system to be connected in parallel, so that the first temperature regulating system and the second temperature regulating system simultaneously regulate the temperature of the second battery pack.

For example, when the second battery pack is in the thermal spread state, it indicates that the second battery pack is in a severe high-temperature state. At this time, the first temperature regulating system and the second temperature regulating system may be controlled to input the temperature regulating liquid into the second temperature regulating circuit in parallel, thereby increasing the liquid flow rate in the second temperature regulating circuit to achieve rapid heat exchange of the second battery pack, that is, to achieve rapid cooling of the second battery pack, reduce the impact of thermal spread of the second battery pack, and buy time for passengers in the vehicle to escape.

In a fifth scenario, in the case that the abnormal state of the second battery pack is the thermal failure state, the first temperature regulating system, the second temperature regulating system, and the second temperature regulating circuit of the second battery pack are controlled to form a series circuit.

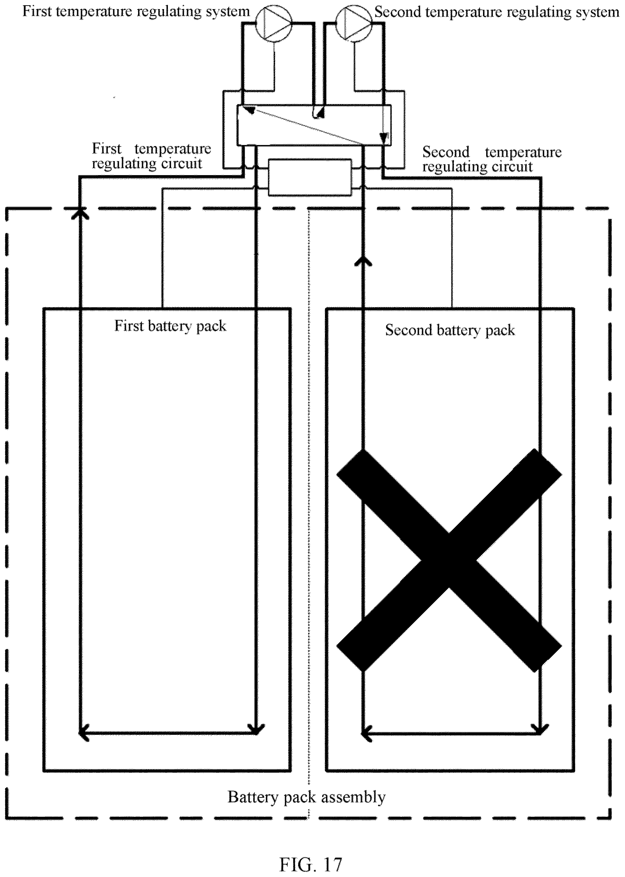

Referring to FIG. 17, which shows a schematic diagram of the first temperature regulating system and the second temperature regulating system regulating the temperature of the second battery pack in series. The multi-way integrated valve may be controlled to communicate the first temperature regulating system with the second temperature regulating system, communicate the first temperature regulating system with the second temperature regulating circuit, and communicate the second temperature regulating system with the second temperature regulating circuit. The temperature regulating liquid output from the first temperature regulating system flows into the second temperature regulating system through the multi-way integrated valve, the temperature regulating liquid output from the second temperature regulating system is transmitted to the second temperature regulating circuit through the multi-way integrated valve, and the temperature regulating liquid output from the second temperature regulating circuit is returned to the first temperature regulating system.

For example, when the second battery pack is in the thermal failure state, it indicates that the high temperature state of the second battery pack is lighter than that of the thermal spread. At this time, the first temperature regulating system, the second temperature regulating system, and the second temperature regulating circuit may be controlled to be connected in series to increase the heat exchange pipeline, so that the residence time of the temperature regulating liquid in the heat exchange pipeline is longer, and the time for the temperature regulating liquid to exchange heat with the second battery pack will also be longer, achieving better cooling effect and allowing the second battery pack to reach a low temperature until it returns to normal temperature and may be used normally.

It may be understood that in the various scenarios mentioned above, the first temperature regulating circuit is a pipeline located around an outside of the first battery pack, and when the temperature regulating liquid passes through the first temperature regulating circuit, it may exchange heat with the first battery pack, thereby achieving temperature regulating of the first battery pack; the second temperature regulating circuit is a pipeline located around an outside of the second battery pack, and when the temperature regulating liquid passes through the second temperature regulating circuit, it may exchange heat with the second battery pack, thereby achieving temperature regulating of the second battery pack.

Through the above technical solution, when any one of the first battery pack and the second battery pack experiences thermal failure or thermal spread, a normal battery pack may supply power to the first temperature regulating system and the second temperature regulating system. At the same time, the first temperature regulating system and the second temperature regulating system will also provide cooling capabilities for the battery pack that experiences thermal failure or thermal spread, to avoid the failure of the thermal management system; and when any one of the first temperature regulating system and the second temperature regulating system fails, a temperature regulating system operating normally will also regulate the temperature of the normal battery pack in parallel or in series or in independent operation, thereby ensuring the normal operation of the thermal management system. Moreover, the present invention may regulate the state of the multi-way valve so that the first temperature regulating system and the second temperature regulating system operate in series combination, in parallel combination or independently, and it may also make the first battery pack and the second battery pack operate in series, parallel or independently, to meet various operating conditions of the vehicle during the driving process, and ensure smooth operation of the vehicle under various operating conditions.

FIGS. 3 and 4 are schematic diagrams of a temperature control system proposed in accordance with an exemplary embodiment of the present invention, which includes the plurality of temperature regulating systems, the plurality of battery packs, and a controller.

The plurality of temperature regulating systems are respectively coupled to the plurality of battery packs, and the plurality of temperature regulating systems are configured to regulate the temperature of the plurality of battery packs.

The plurality of battery packs are configured to supply power to the plurality of temperature regulating systems.

The controller is configured to determine a target temperature regulating system operating normally among the plurality of temperature regulating systems, determine a target control strategy matching a first state of the plurality of temperature regulating systems and a second state of the plurality of battery packs, and finally control the target temperature regulating system to regulate the temperature of the plurality of battery packs according to the target control strategy.

The temperature control system further includes the multi-way valve, which has the following two forms of implementation.

The first form of implementation is that the multi-way valve is a multi-way integrated valve.

For example, as shown in FIG. 3, the multi-way integrated valve may control a liquid outlet of the first temperature regulating system to communicate with a liquid inlet of the second temperature regulating system, may also control the second temperature regulating system to communicate with the second temperature regulating circuit of the second battery pack, may also control the first temperature regulating system to communicate with the first temperature regulating circuit of the first battery pack, and finally make the first temperature regulating system, the second temperature regulating system, the first temperature regulating circuit, and the second temperature regulating circuit form a series temperature regulating pipeline.

It may be understood that the connection state of the first temperature regulating system and the second temperature regulating system operating in parallel or independently may also be obtained through the adjustment of the multi-way integrated valve, which will not be repeated here.

The second form of implementation is that the multi-way valve includes a first controllable valve, a second controllable valve, a third controllable valve, and a fourth controllable valve, the plurality of temperature regulating systems include the first temperature regulating system and the second temperature regulating system, and the plurality of battery packs include the first battery pack and the second battery pack; the first end of the first controllable valve is connected to the first battery pack and the first temperature regulating system, and a second end of the first controllable valve is connected to the second battery pack and the second temperature regulating system; the first end of the second controllable valve is connected to the first end of the first controllable valve, and the second end of the second controllable valve is connected between the first temperature regulating system and the second temperature regulating system; a first end of the third controllable valve is connected to the second end of the first controllable valve, and a second end of the third controllable valve is connected between the second controllable valve and the second temperature regulating system; and the fourth controllable valve is connected between the second controllable valve and the third controllable valve.

The first controllable valve may control communication of a circuit between the first temperature regulating circuit and the second temperature regulating circuit, and the fourth controllable valve may control communication of a circuit between the first temperature regulating system and the second temperature regulating system. The second controllable valve may control communication of a circuit between the first temperature regulating system and the first temperature regulating circuit, and the third controllable valve may control communication of a circuit between the second temperature regulating system and the second temperature regulating circuit.

For example, as shown in FIG. 4, the first controllable valve controls the first temperature regulating circuit to communicate with the second temperature regulating circuit, the fourth controllable valve controls the first temperature regulating system to communicate with the second temperature regulating system, the second controllable valve controls the first temperature regulating system to cut off from the first temperature regulating circuit, and the third controllable valve controls the second temperature regulating system to cut off from the second temperature regulating circuit, thereby making the first temperature regulating system, the second temperature regulating system, and the first temperature regulating circuit and the second temperature regulating circuit form a series heat exchange pipeline.

It may be understood that the connection state of the first temperature regulating system and the second temperature regulating system operating in parallel or independently may also be obtained through the adjustment of the first controllable valve to the fourth controllable valve, which will not be repeated here.

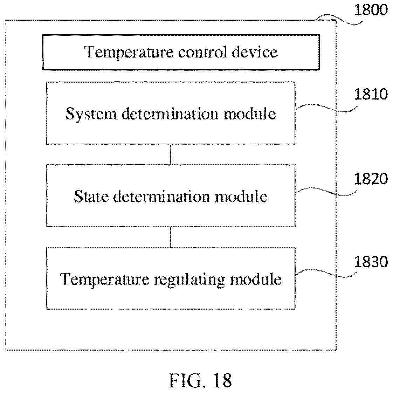

FIG. 18 shows a block diagram of a temperature control device according to an exemplary embodiment. Referring to FIG. 18, the temperature control device 1800 includes a system determination module 1810, a state determination module 1820, and a temperature regulating module 1830.

The system determination module 1810 is configured to determine a target temperature regulating system operating normally among the plurality of temperature regulating systems. The temperature regulating system is configured to regulate the temperature of the battery pack, and the battery pack is configured to supply power to the temperature regulating system.

The state determination module 1820 is configured to determine a target control strategy matching a first state of the plurality of temperature regulating systems and a second state of the plurality of battery packs.

The temperature regulating module 1830 is configured to control the target temperature regulating system to regulate the temperature of the plurality of battery packs according to the target control strategy.

Optionally, the multi-way valve is provided between the plurality of temperature regulating systems and the plurality of battery packs, and the temperature regulating module 1830 includes: a temperature regulating submodule configured to control a communication state of the multi-way valve according to the target control strategy, and then control the target temperature regulating system to regulate the temperature of the plurality of battery packs.

Optionally, the plurality of temperature regulating systems include the first temperature regulating system and the second temperature regulating system, the plurality of battery packs include the first battery pack and the second battery pack, the target temperature regulating system includes the first temperature regulating system and the second temperature regulating system, the first state is a state where the first temperature regulating system and the second temperature regulating system operate normally, the second state is a state where the first battery pack and the second battery pack operate normally, and a corresponding target control strategy is the first control strategy.

The temperature regulating submodule is further configured to control the first temperature regulating system and the second temperature regulating system to regulate the temperature of the first battery pack and the second battery pack according to the first control strategy.

Optionally, the temperature regulating submodule includes: a control submodule configured to control the first temperature regulating system to communicate with the first temperature regulating circuit of the first battery pack, and control the second temperature regulating system to communicate with the second temperature regulating circuit between of the second battery pack; wherein, after the first temperature regulating system is communicated with the first temperature regulating circuit, the first temperature regulating system regulates the temperature of the first battery pack; and after the second temperature regulating system is communicated with the second temperature regulating circuit, the second temperature regulating system regulates the temperature of the second battery pack.

Optionally, the control submodule is further configured to control the first temperature regulating system, the second temperature regulating system, the first temperature regulating circuit of the first battery pack, and the second temperature regulating circuit of the second battery pack to form a series circuit.

Optionally, the control submodule is further configured to control the first temperature regulating system to communicate with the first temperature regulating circuit of the first battery pack and the second temperature regulating circuit of the second battery pack, and to control the second temperature regulating system to communicate with the first temperature regulating circuit and the second temperature regulating circuit; wherein, after the first temperature regulating system is communicated with the first temperature regulating circuit and the second temperature regulating circuit, the first temperature regulating system simultaneously regulates the temperature of the first battery pack and the second battery pack; after the second temperature regulating system is communicated with the first temperature regulating circuit and the second temperature regulating circuit, the second temperature regulating system simultaneously regulates the temperature of the first battery pack and the second battery pack.

Optionally, the plurality of temperature regulating systems include the first temperature regulating system and the second temperature regulating system, the plurality of battery packs include the first battery pack and the second battery pack, the target temperature regulating system is the first temperature regulating system, the first state is a state where the first temperature regulating system operates normally and the second temperature regulating system is abnormal, the second state is a state where the first battery pack and the second battery pack operate normally, and the corresponding target control strategy is the second control strategy; the temperature regulating submodule is further configured to control the first temperature regulating system to regulate the temperature of the first battery pack and the second battery pack according to the second control strategy.

Optionally, the control submodule is further configured to control the first temperature regulating system to communicate with the first temperature regulating circuit of the first battery pack and the second temperature regulating circuit of the second battery pack; wherein, after the first temperature regulating system is communicated with the first temperature regulating circuit and the second temperature regulating circuit, the first temperature regulating system simultaneously regulates the temperature of the first battery pack and the second battery pack.

Optionally, the control submodule is further configured to control the first temperature regulating system, the first temperature regulating circuit of the first battery pack, and the second temperature regulating circuit of the second battery pack to form a series circuit.

Optionally, the plurality of temperature regulating systems include the first temperature regulating system and the second temperature regulating system, the plurality of battery packs include the first battery pack and the second battery pack, the target temperature regulating system includes the first temperature regulating system and the second temperature regulating system, the first state is a state where a first temperature regulating system operates normally and the second temperature regulating system is abnormal, the second state is a state where any one of the first battery pack and the second battery pack is abnormal, and the corresponding target control strategy is the third control strategy; the temperature regulating submodule is further configured to control the first temperature regulating system to regulate the temperature of the first battery pack or the second battery pack according to the third control strategy.

Optionally, the control submodule is further configured to control the first temperature regulating system to communicate with the first temperature regulating circuit of the first battery pack when the first battery pack is normal and the second battery pack is damaged; wherein, after the first temperature regulating system is communicated with the first temperature regulating circuit, the first temperature regulating system regulates the temperature of the first battery pack.

Optionally, the control submodule is further configured to control the first temperature regulating system to communicate with the second temperature regulating circuit of the second battery pack when the first battery pack is damaged and the second battery pack is normal; wherein, after the first temperature regulating system is communicated with the second temperature regulating circuit, the first temperature regulating system regulates the temperature of the second battery pack.

Optionally, the control submodule is further configured to control the first temperature regulating system to communicate with the second temperature regulating circuit of the second battery pack when the first battery pack is normal and the temperature of the second battery pack exceeds the temperature threshold; wherein, after the first temperature regulating system is communicated with the second temperature regulating circuit, the first temperature regulating system regulates the temperature of the second battery pack.

Optionally, the plurality of temperature regulating systems include the first temperature regulating system and the second temperature regulating system, the plurality of battery packs include the first battery pack and the second battery pack, the target temperature regulating system includes the first temperature regulating system and the second temperature regulating system, the first state is a state where the first temperature regulating system and the second temperature regulating system operate normally, the second state is a state where the second battery pack is abnormal, and the corresponding target control strategy is the fourth control strategy; the temperature regulating submodule is further configured to control the first temperature regulating system and the second temperature regulating system to regulate the temperature of the first battery pack or the second battery pack according to the fourth control strategy.

Optionally, the control submodule is further configured to control the first temperature regulating system to communicate with the first temperature regulating circuit of the first battery pack when the abnormal state of the second battery pack is the damaged state; wherein, after the first temperature regulating system is communicated with the first temperature regulating circuit, the first temperature regulating system regulates the temperature of the first battery pack.

Optionally, the control submodule is further configured to control the first temperature regulating system and the second temperature regulating system to communicate with the first temperature regulating circuit of the first battery pack when the abnormal state of the second battery pack is the damaged state.

Optionally, the control submodule is further configured to control the first temperature regulating system to communicate with the first temperature regulating circuit of the first battery pack and control the second temperature regulating system to communicate with the first temperature regulating circuit when the abnormal state of the second battery pack is the damaged state; wherein, after the first temperature regulating system is communicated with the first temperature regulating circuit, the first temperature regulating system regulates the temperature of the first battery pack; and after the second temperature regulating system is communicated with the first temperature regulating circuit, the second temperature regulating system regulates the temperature of the first battery pack.

Optionally, the control submodule is further configured to control the first temperature regulating system to communicate with the second temperature regulating circuit of the second battery pack and control the second temperature regulating system to communicate with the second temperature regulating circuit when the abnormal state of the second battery pack is the thermal spread state; wherein, after the first temperature regulating system is communicated with the second temperature regulating circuit, the first temperature regulating system regulates the temperature of the second battery pack; and after the second temperature regulating system is communicated with the second temperature regulating circuit, the second temperature regulating system regulates the temperature of the second battery pack.

Optionally, the control submodule is further configured to control the first temperature regulating system, the second temperature regulating system, and the second temperature regulating circuit of the second battery pack to form a series circuit when the abnormal state of the second battery pack is the thermal failure state.

With regards to the device in the above embodiments, the specific way in which each module performs the operation has been described with reference to the embodiments of the method and will not be elaborated here.

The present invention further provides a computer readable storage medium with computer program instructions stored thereon, wherein the program instructions implement the steps of the temperature control method provided in the present invention when executed by a processor.

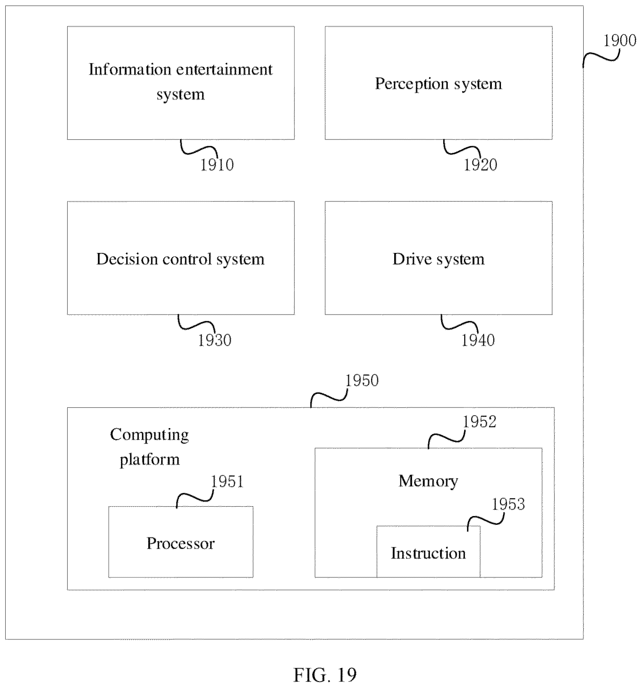

FIG. 19 shows a block diagram of a vehicle 1900 according to an exemplary embodiment. For example, the vehicle 1900 may be a hybrid vehicle, a non-hybrid vehicle, an electric vehicle, a fuel cell vehicle, or other types of vehicles. The vehicle 1900 may be an autonomous vehicle, a semi-autonomous vehicle, or a non-autonomous vehicle.

Referring to FIG. 19, the vehicle 1900 may include various subsystems, such as an information entertainment system 1910, a perception system 1920, a decision control system 1930, a drive system 1940, and a computing platform 1950. The vehicle 1900 may also include more or fewer subsystems, and each subsystem may include a plurality of components. In addition, each subsystem and each component of the vehicle 1900 may be interconnected through wired or wireless means.

In some embodiments, the information entertainment system 1910 may include a communication system, an entertainment system, a navigation system, and so on.

The perception system 1920 may include several types of sensors for sensing information about the environment surrounding the vehicle 1900. For example, the perception system 1920 may include a global positioning system (which may be a GPS system, a Beidou system, or other positioning systems), an inertial measurement unit (IMU), a laser radar, a millimeter wave radar, an ultrasonic radar, and a camera device.

The decision control system 1930 may include a computing system, a vehicle controller, a steering system, an accelerator, and a braking system.

The drive system 1940 may include components that provide power movement for the vehicle 1900. In an embodiment, the drive system 1940 may include an engine, an energy source, a transmission system, and wheels. The engine may be one or a combination of an internal combustion engine, an electric motor, or an air compression engine. The engine may convert the energy provided by the energy source into mechanical energy.

Part or all of the functions of the vehicle 1900 are controlled by the computing platform 1950. The computing platform 1950 may include at least one processor 1951 and a memory 1952, and the processor 1951 may execute the instructions 1953 stored on the memory 1952.

The processor 1951 may be any conventional processor, such as a commercially available CPU. The processor may also include such as a graphic process unit (GPU), a field programmable gate array

(FPGA), a system on chip (SOC), an application specific integrated circuit (ASIC), or a combination thereof.

The memory 1952 may be implemented with any types of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

In addition to the instructions 1953, the memory 1952 may also store data such as road maps, route information, vehicle location, direction, speed, and other data. The data stored in the memory 1952 may be used by the computing platform 1950.

In embodiments of the present invention, the processor 1951 may execute the instructions 1953 to complete all or part of the steps of the temperature control method described above. Of course, the processor 1951 may be a controller, which may execute the above instructions 1953 to complete all or part of the steps of the temperature control method described above.

## Claims

1. A temperature control method, comprising:
determining (S 11) a target temperature regulating system operating normally among a plurality of temperature regulating systems, the plurality of temperature regulating systems being configured to regulate a temperature of a plurality of battery packs, and the plurality of battery packs being configured to supply power to the plurality of temperature regulating systems;
determining (S12) a target control strategy matching a first state of the plurality of temperature regulating systems and a second state of the plurality of battery packs; and
controlling (S13) the target temperature regulating system to regulate the temperature of the plurality of battery packs according to the target control strategy.

2. The method according to claim 1, wherein a multi-way valve is provided between the plurality of temperature regulating systems and the plurality of battery packs, and controlling (S13) the target temperature regulating system to regulate the temperature of the plurality of battery packs according to the target control strategy comprises:
controlling a communication state of the multi-way valve according to the target control strategy, and controlling the target temperature regulating system to regulate the temperature of the plurality of battery packs.

3. The method according to claim 1 or 2, wherein the plurality of temperature regulating systems comprise a first temperature regulating system and a second temperature regulating system, the plurality of battery packs comprise a first battery pack and a second battery pack, the target temperature regulating system comprises the first temperature regulating system and the second temperature regulating system, the first state is a state where the first temperature regulating system and the second temperature regulating system operate normally, the second state is a state where the first battery pack and the second battery pack operate normally, and a corresponding target control strategy is a first control strategy; and controlling (S13) the target temperature regulating system to regulate the temperature of the plurality of battery packs according to the target control strategy comprises:
controlling the first temperature regulating system and the second temperature regulating system to regulate the temperature of the first battery pack and the second battery pack according to the first control strategy.

4. The method according to claim 3, wherein controlling the first temperature regulating system and the second temperature regulating system to regulate the temperature of the first battery pack and the second battery pack according to the first control strategy comprises:
controlling the first temperature regulating system to communicate with a first temperature regulating circuit of the first battery pack, and controlling the second temperature regulating system to communicate with a second temperature regulating circuit of the second battery pack;
wherein, after the first temperature regulating system is communicated with the first temperature regulating circuit, the first temperature regulating system regulates the temperature of the first battery pack; and after the second temperature regulating system is communicated with the second temperature regulating circuit, the second temperature regulating system regulates the temperature of the second battery pack.

5. The method according to claim 3, wherein controlling the first temperature regulating system and the second temperature regulating system to regulate the temperature of the first battery pack and the second battery pack according to the first control strategy comprises:
controlling the first temperature regulating system, the second temperature regulating system, a first temperature regulating circuit of the first battery pack, and a second temperature regulating circuit of the second battery pack to form a series circuit; or
wherein controlling the first temperature regulating system and the second temperature regulating system to regulate the temperature of the first battery pack and the second battery pack according to the first control strategy comprises:
controlling the first temperature regulating system to communicate with a first temperature regulating circuit of the first battery pack and a second temperature regulating circuit of the second battery pack, and controlling the second temperature regulating system to communicate with the first temperature regulating circuit and the second temperature regulating circuit;
wherein, after the first temperature regulating system is communicated with the first temperature regulating circuit and the second temperature regulating circuit, the first temperature regulating system simultaneously regulates the temperature of the first battery pack and the second battery pack; after the second temperature regulating system is communicated with the first temperature regulating circuit and the second temperature regulating circuit, the second temperature regulating system simultaneously regulates the temperature of the first battery pack and the second battery pack.

6. The method according to claim 1 or 2, wherein the plurality of temperature regulating systems comprise a first temperature regulating system and a second temperature regulating system, the plurality of battery packs comprise a first battery pack and a second battery pack, the target temperature regulating system is the first temperature regulating system, the first state is a state where the first temperature regulating system operates normally and the second temperature regulating system is abnormal, the second state is a state where the first battery pack and the second battery pack operate normally, and a corresponding target control strategy is a second control strategy; and controlling (S13) the target temperature regulating system to regulate the temperature of the plurality of battery packs according to the target control strategy comprises:
controlling the first temperature regulating system to regulate the temperature of the first battery pack and the second battery pack according to the second control strategy.

7. The method according to claim 6, wherein controlling the first temperature regulating system to regulate the temperature of the first battery pack and the second battery pack according to the second control strategy comprises:
controlling the first temperature regulating system to communicate with a first temperature regulating circuit of the first battery pack and a second temperature regulating circuit of the second battery pack;
wherein, after the first temperature regulating system is communicated with the first temperature regulating circuit and the second temperature regulating circuit, the first temperature regulating system simultaneously regulates the temperature of the first battery pack and the second battery pack; or
wherein controlling the first temperature regulating system to regulate the temperature of the first battery pack and the second battery pack according to the second control strategy comprises:
controlling the first temperature regulating system, a first temperature regulating circuit of the first battery pack, and a second temperature regulating circuit of the second battery pack to form a series circuit.

8. The method according to claim 1 or 2, wherein the plurality of temperature regulating systems comprise a first temperature regulating system and a second temperature regulating system, the plurality of battery packs comprise a first battery pack and a second battery pack, the target temperature regulating system comprises the first temperature regulating system and the second temperature regulating system, the first state is a state where the first temperature regulating system operates normally and the second temperature regulating system is abnormal, the second state is a state where any one of the first battery pack and the second battery pack is abnormal, and a corresponding target control strategy is a third control strategy; and controlling (S13) the target temperature regulating system to regulate the temperature of the plurality of battery packs according to the target control strategy comprises:
controlling the first temperature regulating system to regulate the temperature of the first battery pack or the second battery pack according to the third control strategy.

9. The method according to claim 8, wherein controlling the first temperature regulating system to regulate the temperature of the first battery pack or the second battery pack according to the third control strategy comprises:
controlling the first temperature regulating system to communicate with a first temperature regulating circuit of the first battery pack when the first battery pack is normal and the second battery pack is damaged;
wherein, after the first temperature regulating system is communicated with the first temperature regulating circuit, the first temperature regulating system regulates the temperature of the first battery pack; or
wherein controlling the first temperature regulating system to regulate the temperature of the first battery pack or the second battery pack according to the third control strategy comprises:
controlling the first temperature regulating system to communicate with a second temperature regulating circuit of the second battery pack when the first battery pack is damaged and the second battery pack is normal;
wherein, after the first temperature regulating system is communicated with the second temperature regulating circuit, the first temperature regulating system regulates the temperature of the second battery pack; or
wherein controlling the first temperature regulating system to regulate the temperature of the first battery pack or the second battery pack according to the third control strategy comprises:
controlling the first temperature regulating system to communicate with a second temperature regulating circuit of the second battery pack when the first battery pack is normal and the temperature of the second battery pack exceeds a temperature threshold;
wherein, after the first temperature regulating system is communicated with the second temperature regulating circuit, the first temperature regulating system regulates the temperature of the second battery pack.

10. The method according to claim 1 or 2, wherein the plurality of temperature regulating systems comprise a first temperature regulating system and a second temperature regulating system, the plurality of battery packs comprise a first battery pack and a second battery pack, the target temperature regulating system comprises the first temperature regulating system and the second temperature regulating system, the first state is a state where the first temperature regulating system and the second temperature regulating system operate normally, the second state is a state where the second battery pack is abnormal, and a corresponding target control strategy is a fourth control strategy; and controlling (S13) the target temperature regulating system to regulate the temperature of the plurality of battery packs according to the target control strategy comprises:
controlling the first temperature regulating system and the second temperature regulating system to regulate the temperature of the first battery pack or the second battery pack according to the fourth control strategy.

11. The method according to claim 10, wherein controlling the first temperature regulating system and the second temperature regulating system to regulate the temperature of the first battery pack or the second battery pack according to the fourth control strategy comprises:
controlling the first temperature regulating system to communicate with a first temperature regulating circuit of the first battery pack when an abnormal state of the second battery pack is a damaged state;
wherein, after the first temperature regulating system is communicated with the first temperature regulating circuit, the first temperature regulating system regulates the temperature of the first battery pack.

12. The method according to claim 10, wherein controlling the first temperature regulating system and the second temperature regulating system to regulate the temperature of the first battery pack or the second battery pack according to the fourth control strategy comprises:
controlling the first temperature regulating system and the second temperature regulating system to communicate with a first temperature regulating circuit of the first battery pack when an abnormal state of the second battery pack is a damaged state; or
wherein controlling the first temperature regulating system and the second temperature regulating system to regulate the temperature of the first battery pack or the second battery pack according to the fourth control strategy comprises:
controlling the first temperature regulating system to communicate with a first temperature regulating circuit of the first battery pack and controlling the second temperature regulating system to communicate with the first temperature regulating circuit when an abnormal state of the second battery pack is a damaged state;
wherein, after the first temperature regulating system is communicated with the first temperature regulating circuit, the first temperature regulating system regulates the temperature of the first battery pack; and after the second temperature regulating system is communicated with the first temperature regulating circuit, the second temperature regulating system regulates the temperature of the first battery pack; or
wherein controlling the first temperature regulating system and the second temperature regulating system to regulate the temperature of the first battery pack or the second battery pack according to the fourth control strategy comprises:
controlling the first temperature regulating system to communicate with a second temperature regulating circuit of the second battery pack and controlling the second temperature regulating system to communicate with the second temperature regulating circuit when an abnormal state of the second battery pack is a thermal spread state;
wherein, after the first temperature regulating system is communicated with the second temperature regulating circuit, the first temperature regulating system regulates the temperature of the second battery pack; and after the second temperature regulating system is communicated with the second temperature regulating circuit, the second temperature regulating system regulates the temperature of the second battery pack; or
wherein controlling the first temperature regulating system and the second temperature regulating system to regulate the temperature of the first battery pack or the second battery pack according to the fourth control strategy comprises:
controlling the first temperature regulating system, the second temperature regulating system, and a second temperature regulating circuit of the second battery pack to form a series circuit when an abnormal state of the second battery pack is a thermal failure state.

13. A temperature control system, comprising a plurality of temperature regulating systems, a plurality of battery packs, and a controller configured to execute a method according to any one of claims 1 to 12;
wherein, the plurality of temperature regulating systems are respectively coupled to the plurality of battery packs, and the plurality of temperature regulating systems are configured to regulate the temperature of the plurality of battery packs; and
the plurality of battery packs are configured to supply power to the plurality of temperature regulating systems.

14. A temperature control device (1800), comprising:
a system determination module (1810) configured to determine a target temperature regulating system operating normally among a plurality of temperature regulating systems, the temperature regulating system being configured to regulate the temperature of a battery pack, and the battery pack being configured to supply power to the temperature regulating system;
a state determination module (1820) configured to determine a target control strategy matching a first state of the plurality of temperature regulating systems and a second state of a plurality of battery packs; and
a temperature regulating module (1830) configured to control the target temperature regulating system to regulate the temperature of the plurality of battery packs according to the target control strategy.

15. A vehicle (1900), comprising a temperature control system according to claim 13.
